(19) Europäisches Patentamt / European Patent Office / Office européen des brevets

(11) **EP 1 785 688 B1**

(12) **FASCICULE DE BREVET EUROPEEN**

(45) Date de publication et mention
de la délivrance du brevet:
**14.04.2010 Bulletin 2010/15**

(51) Int Cl.:
***F41G 7/22*** *(2006.01)*

(21) Numéro de dépôt: **06123810.1**

(22) Date de dépôt: **10.11.2006**

(54) **Procédé et dispositif de détermination de la vitesse de rotation d'une droite projectile-cible et dispositif de guidage d'un projectile, notamment d'une munition**

Verfahren und Vorrichtung um die Rotationsgeschwindigkeit der Geschoßziellinie zu bestimmen und Lenkvorrichtung eines Geschoßes, insbesondere von Munition

Method and apparatus for determining the rotation speed of the projectile-target line and guidance apparatus for a projectile, especially an ammunition

(84) Etats contractants désignés:
**BE DE GB SE**

(30) Priorité: **10.11.2005 FR 0511467**

(43) Date de publication de la demande:
**16.05.2007 Bulletin 2007/20**

(73) Titulaire: **TDA ARMEMENTS S.A.S.**
**45240 La Ferté Saint-Aubin (FR)**

(72) Inventeur: **Brisson, Grégoire**
**45100 Orléans la Source (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
EP-A- 1 291 600    FR-A- 2 846 083
FR-A- 2 872 928    US-A- 4 397 430
US-A- 4 500 051    US-A- 4 679 748
US-A- 5 696 347

- FLECK V ET AL: "Study of Real-time Filtering for an Inertial Measurement Unit (IMU) with Magnetometer in a 155mm Projectile" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 803-807, XP010925002 ISBN: 0-7803-9454-2
- KREICHAUF R ET AL: "Estimation of the Roll Angle in a Spinning Guided Munition Shell" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 1-5, XP010924836 ISBN: 0-7803-9454-2

**EP 1 785 688 B1**

## Description

La présente invention concerne un procédé et un dispositif de détermination de la vitesse de rotation d'une droite projectile-cible. Elle concerne également un dispositif de guidage d'un projectile. Elle s'applique notamment pour le guidage d'une munition vers une cible. Plus généralement elle s'applique pour le guidage de projectiles nécessitant un faible coût de réalisation.

Un projectile autopropulsé ou non, par exemple une munition, une fois lancé doit atteindre sa cible au moyen d'un dispositif de guidage situé à l'avant du projectile. Les moyens de guidage agissent par exemple sur les gouvernes du projectile de façon à conduire le projectile à la cible. A cet effet le dispositif de guidage effectue différentes mesures utilisées comme entrées de la boucle d'asservissement.

Une loi de guidage parmi les plus utilisées dans le domaine des armements guidés est la loi dite de « navigation proportionnelle ». Cette loi consiste à commander un facteur de charge, noté $\vec{\Gamma}_C$, proportionnel à la vitesse de rotation de la droite reliant la munition à la cible, dite droite munition-but, cette vitesse étant notée $\vec{\Omega}_{MB}$. La droite munition-but est la droite qui relie la tête du projectile à la cible. Cette droite évolue en permanence en raison des mouvements relatifs du projectile d'une part et de la cible d'autre part. Cette évolution de la droite munition-but se traduit par un mouvement de rotation. C'est la vitesse de cette rotation, $\vec{\Omega}_{MB}$, qui intervient dans la définition du facteur de charge utilisé dans la loi de guidage. Le facteur de charge $\vec{\Gamma}_c$ est donné par la relation suivante :

$$\vec{\Gamma}_c = -A.(\vec{V}_M - \vec{V}_B) \wedge \vec{\Omega}_{MB} \qquad (1)$$

où A est une constante de navigation proportionnelle et $\vec{V}_M$ et $\vec{V}_B$ sont respectivement les vecteurs vitesse de la munition et de la cible.

La loi de navigation proportionnelle est très intéressante pour les performances qu'elle présente, notamment pour une cible mobile.

La mesure de la vitesse de rotation de la droite munition-but est habituellement réalisée par un autodirecteur, notamment dans le cas où les projectiles sont des missiles. A cet effet, un écartomètre est monté sur une partie mobile de l'autodirecteur, encore appelée l'aérien. L'axe de cet aérien est asservi sur la direction de la cible. Un tel autodirecteur est complexe, notamment à cause de l'asservissement de l'aérien, soit par précession gyroscopique, soit à l'aide de gyromètres. La complexité et la fragilité de ce dispositif mécanique sont peu adaptées aux environnements de munitions soumises à des chocs qui peuvent être violents. Enfin, si le coût d'une telle solution est acceptable pour un missile par exemple, il peut être prohibitif pour une munition guidée, produite en grande quantité et dont le coût doit être relativement faible.

Une demande de brevet FR-A-2 872 928 décrit un procédé de guidage et de pilotage d'un projectile vers une cible en utilisant les composantes du champ magnétique terrestre dans un repère lié au projectile.

Le document V. Fleck et al : « Study of Real-time Filtering for an Inertial Measurement Unit (IMU) with Magnetometer in a 155mm Projectile » Position, Location and Navigation Symposium, 2006 IEEE/ION Coronado, CA April 25-27, 2006, Piscataway, NJ, USA, IEEE, 25 avril 2006, pages 803-807 et le document R.Kreichauf et al : « Estimation of the Roll Angle in a Spinning Guided Munition Shell » Position, Location and Navigation Symposium, 2006 IEEE/ION Coronado, CA April 25-27, 2006, Piscataway, NJ, USA, IEEE, 25 avril 2006, pages 1-5 décrivent des estimations de trajectoire et d'angle de roulis d'un projectile.

Un but de l'invention est notamment de pallier ces inconvénients, en permettant de réaliser la fonction d'un autodirecteur, plus particulièrement la mesure de la vitesse de rotation de la droite munition-but, de façon fiable, robuste et économique. A cet effet, l'invention a pour objet un procédé de détermination de la vitesse de rotation de la droite reliant un projectile à sa cible tel que défini par les revendications.

L'invention a également pour objet un dispositif de détermination de la vitesse de rotation de la droite reliant un projectile à sa cible tel que défini par les revendications.

Enfin, l'invention a également pour objet un dispositif de guidage d'un projectile, caractérisé en ce qu'il comporte un dispositif de détermination de la vitesse de rotation de la droite reliant un projectile à sa cible tel que défini précédemment fournissant les composantes de la vitesse de rotation à un calculateur appliquant une loi de navigation proportionnelle.

D'autres caractéristiques et avantages de l'invention apparaîtront à l'aide de la description qui suit faite en regard de dessins annexés qui représentent :

- la figure 1, une illustration des composantes d'un dispositif de détermination de la vitesse de rotation d'une droite munition-but selon l'invention (une variante consistant à remplacer les gyromètres transverses par des accéléromètres) ;

- la figure 2, une illustration de moyens de guidage d'une munition ;
- la figure 3, les systèmes d'axes utilisés par un dispositif selon l'invention ;
- la figure 4, par un synoptique, une illustration d'un dispositif de guidage selon l'invention (une variante consistant à remplacer les gyromètres transverses 3 et 4 mesurant q et r par des accéléromètres transverses mesurant $\Gamma_Y$ et $\Gamma_Z$).

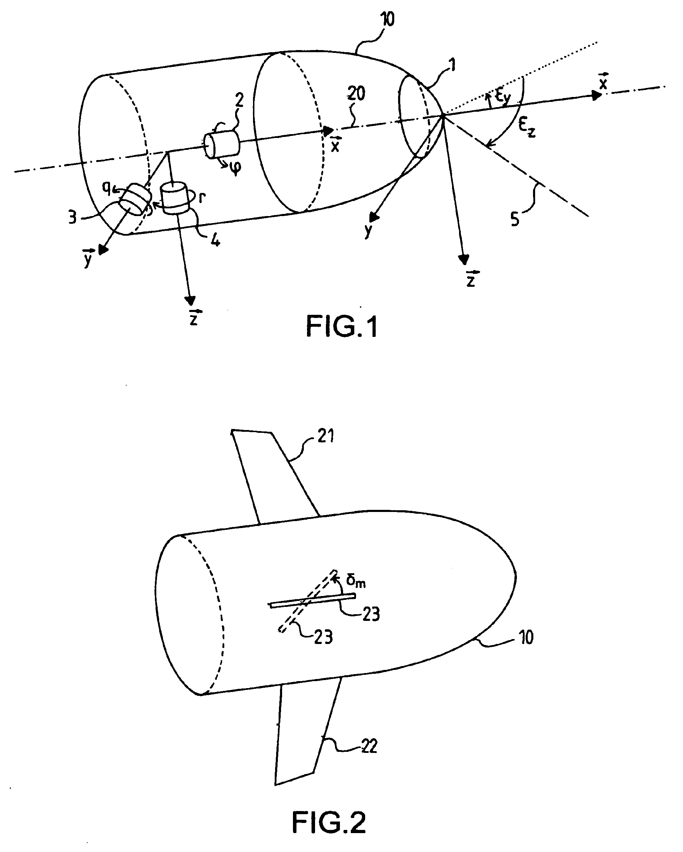

La figure 1 illustre un dispositif de détermination de la vitesse de rotation de la droite reliant un projectile à sa cible selon l'invention, équipant un projectile 10. Par la suite il sera simplement appelé dispositif de mesure.
Dans l'exemple d'application qui est considéré par la suite, le projectile est une munition. Le dispositif de mesure selon l'invention comporte au moins :

- un écartométre 1 disposé à l'avant de la munition ;
- un senseur de roulis 2 disposé sur l'axe 20 de la munition ;
- deux gyromètres transverses 3, 4 disposés selon deux axes y, z orthogonaux ; un calculateur pour traiter les données captées par les composants 1, 2, 3, 4 précités en mettant en oeuvre le traitement décrit par la suite.

L'écartomètre est un dispositif qui mesure l'écart angulaire entre son axe et la direction de la cible, représentée par la droite munition-but 5. L'axe de l'écartomètre et l'axe 20 de la munition sont par ailleurs de préférence confondus. L'écartomètre utilisé par l'invention peut être sensible à différents types de rayonnement, par exemple électromagnétique, infrarouge ou Laser. La figure 1 montre par ailleurs la droite munition-but 5 reliant la munition 10 à sa cible. Un dispositif de mesure selon l'invention permet de déterminer la vitesse de rotation de cette droite 5.

La figure 2 illustre des moyens de guidage équipant la munition de la figure 1 activés par un dispositif selon l'invention. La munition 10 est ainsi équipée de gouvernes mobiles 21, 22, 23. Les gouvernes sont par exemple au nombre de quatre, deux gouvernes 21, 22 étant situées dans un même plan et deux autres gouvernes 23, dont une seule est représentée sur la figure 2, étant situées dans le plan perpendiculaire. Les axes des plans de gouverne sont orthogonaux. Ces gouvernes sont commandées par des interfaces non représentées. Les interfaces sont elles-mêmes commandées par un dispositif de traitement qui exploite la mesure de vitesse de rotation effectuée par le dispositif de mesure de la figure 1. Les gouvernes d'un même plan sont par exemple solidaires. Il n'y a pas de braquage différentiel. Le mouvement de la munition est commandé par l'orientation des gouvernes. La figure 2 illustre le mouvement angulaire d'une gouverne 23, par l'angle $\delta_m$ entre une position donnée et la position neutre de la gouverne.

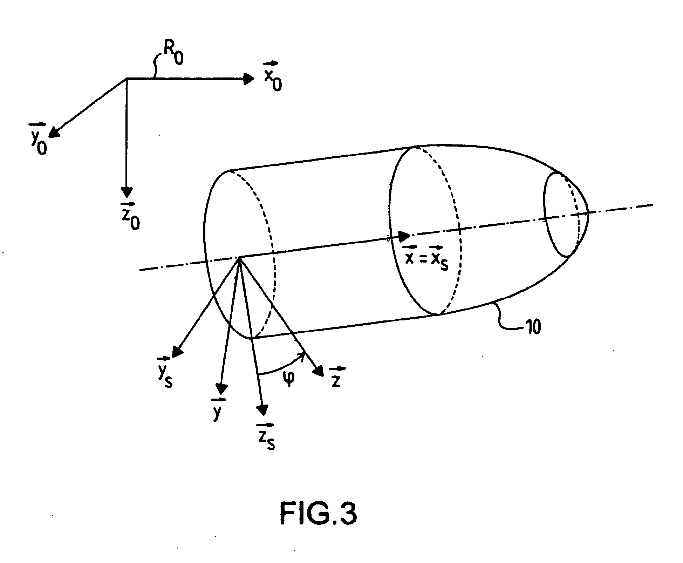

La figure 3 illustre les systèmes d'axes utilisés pour la mise en oeuvre du procédé selon l'invention. Un repère géographique local $R_0$, $x_0$, $y_0$, $z_0$, comporte un axe $z_0$ parallèle à la verticale descendante. Un autre repère x, y, z, appelé par la suite repère lié a son axe x qui est l'axe 20 de la munition et ses deux autres axes y, z sont parallèles aux axes de gouvernes. Plus précisément, l'axe z est parallèle à l'axe des deux premières gouvernes 21, 22 et l'axe y est parallèle à l'axe des deux autres gouvernes, dont une seule 23 est représentée. L'écart angulaire entre l'axe de l'écartomètre, confondu avec l'axe x, et la droite munition-but 5 est défini par une composante $\varepsilon_y$ autour de l'axe y et par une composante $\varepsilon_z$ autour de l'axe z.
Un autre repère $x_s$, $y_s$, $z_s$, appelé par la suite repère semi-lié comporte un axe $x_s$ qui aussi est l'axe 20 de la munition. Ce repère semi-lié comporte un autre axe $z_s$ tel que la verticale $z_o$ soit incluse dans le plan ($x_s$, $z_s$). Le repère semi-lié n'est donc pas soumis au mouvement de roulis de la munition. Le passage du repère semi-lié au repère lié se fait par une rotation de l'angle de roulis $\varphi$ autour de l'axe de la munition. On appelle plan de tangage le plan ($x_s$, $z_s$) et plan de lacet le plan ($x_s$, $y_s$).

Pour la suite de la description, on note :

M : la position de la munition 10 ;
B : la position du but, en fait de la cible à atteindre ;
V : la norme du vecteur vitesse $\vec{V}$ de la munition ;
R : la distance munition-but : $R = \|\overrightarrow{MB}\|$ ;
$\overrightarrow{\Omega}_{MB}$ : le vecteur vitesse de rotation de la droite munition-but déjà cité ;
$\dot{\eta}_y$ et $\dot{\eta}_z$ : les coordonnées de $\overrightarrow{\Omega}_{MB}$ sur les axes $\vec{y}$ et $\vec{z}$ du repère lié ;
$\dot{\eta}_{ys}$ et $\dot{\eta}_{zs}$ : les coordonnées de $\overrightarrow{\Omega}_{MB}$ sur les axes $\vec{y}_s$ et $\vec{z}_s$ du repère semi-lié ;
$\varepsilon_y$ et $\varepsilon_z$ : les écartométries mesurées dans le repère lié et représentées sur la figure 1 ;
$\varepsilon_{ys}$ et $\varepsilon_{zs}$ : les écartométries mesurées exprimées dans le repère semi-lié ;
$\overrightarrow{\Omega}$ : le vecteur vitesse de rotation de la munition ;
p, q, r : les vitesses de rotation de la munition respectivement autour des axes liés $\vec{x}$, $\vec{y}$ et $\vec{z}$ ;
$p_s$, $q_s$, $r_s$ : les vitesses de rotation de la munition autour des axes semi-liés $\vec{x}_s$, $\vec{y}_s$ et $\vec{z}_s$ ;
G : le centre de gravité de la munition, supposé fixe par rapport au corps de la munition ;
N : le point où sont disposés les accéléromètres transverses selon la variante présentée précédemment. Le point N est situé par exemple sur l'axe de la munition à une abscisse $x_N$ par rapport au centre de gravité : $\overrightarrow{GN} = x_N \cdot \vec{x}$ ;

$\Gamma_X$, $\Gamma_Y$, $\Gamma_Z$ : les accélérations non gravitationelles du point N selon les axes liés $\vec{x}$, $\vec{y}$ et $\vec{z}$ ;

$\Gamma_{Xs}$, $\Gamma_{Ys}$, $\Gamma_{Zs}$ : les accélérations non gravitationelles du point N selon les axes semi-liés $\vec{x}_s$, $\vec{y}_s$ et $\vec{z}_s$ ;

$\vec{\Omega}_s$ : le vecteur vitesse de rotation du repère semi-lié ;

$P_s$,$Q_s$,$R_s$ : les vitesses de rotation du repère semi-lié autour des axes semi-liés $\vec{x}_s$, $\vec{y}_s$ et $\vec{z}_s$ ;

$\alpha$ et $\beta$ : les incidences de la munition exprimées dans le repère lié ;

$\alpha_s$ et $\beta_s$ : les incidences de la munition exprimées dans le repère semi-lié ;

$\varphi$ : l'angle de roulis de la munition déjà cité ;

$\theta$ et $\psi$ : les angles de tangage et de lacet de la munition ;

$\delta_m$ et $\delta_n$ : les braquages de gouvernes réalisés, exprimés dans le repère lié, un angle $\delta_m$ déjà cité étant illustré par la figure 2 ;

$\delta_{ms}$ et $\delta_{ns}$ : les braquages de gouvernes réalisés, exprimés dans le repère semi-lié

Toutes les coordonnées indiquées ci-dessus définissent des angles ou des vitesses de rotation autour des axes $\vec{x}$, $\vec{y}$, $\vec{z}$ ou $\vec{x}_s$, $\vec{y}_s$ $\vec{z}_s$. Ainsi typiquement, $\dot{\eta}_{ys}$ et $\dot{\eta}_{zs}$ représentent respectivement les vitesses de rotation de la droite munition-cible 5 autour des axes $y_s$ et $z_s$, c'est-à-dire finalement les vitesses de rotation de la droite respectivement dans le plan de tangage et dans le plan de lacet de la munition.

Enfin, on utilise les notations classiques suivantes :

$$f_q = -\frac{\overline{q}.S.d^2}{V.B} \cdot C_{mq} \qquad ; \qquad K_\alpha = -\frac{\overline{q}.S.d}{B} \cdot C_{m\alpha} \qquad ;$$

$$\omega_0 = \frac{\overline{q}.S}{m.V} \cdot C_{z\alpha}$$

$$a = \frac{C_{Z\delta}}{C_{Z\alpha}} \quad ; \quad b = \frac{C_{m\delta}}{C_{m\alpha}} \quad ; \quad k = \frac{A}{B}$$

$\vec{q}$ étant la pression cinétique, d le calibre de la munition, S la surface de référence, A et B les inerties axiale et transverse, m la masse, et $C_{m\alpha}$, $C_{mq}$, $C_{m\delta}$, $C_{z\alpha}$, $C_{z\delta}$ les coefficients aérodynamiques de la munition, toutes ces données étant classiquement disponibles. Cette connaissance de tous ces paramètres aérodynamiques de la munition est avantageusement utilisée par l'invention.

Les calculs effectués par un procédé ou un dispositif selon l'invention sont tous réalisés dans le repère semi-lié $x_s$, $y_s$, $z_s$ , ce qui permet de simplifier fortement les algorithmes de calcul. En effet, si dans le repère lié il existe un couplage fort entre les plans de tangage et de lacet, ce couplage disparaît dans le repère semi-lié. Un autre intérêt est que les variables dans le repère semi-lié ont des dynamiques plutôt lentes, puisqu'elles ne sont pas modulées par le roulis. Il y a donc deux algorithmes symétriques réalisés en parallèle. L'un concerne le plan de tangage, l'autre concerne le plan de lacet, et cela dans le repère semi-lié comme le montre la description qui suit.

La mesure du roulis $\varphi$ de la munition, effectuée par le senseur 2, permet de projeter dans le repère semi-lié $x_s$, $y_s$, $z_s$ les mesures réalisées dans le repère lié x, y, z.

Ces mesures concernent les vitesses de rotation q, r de la munition autour des axes liés $\vec{y}$ et $\vec{z}$ mesurées par les gyromètres 3, 4, les accélérations $\Gamma_Y$, $\Gamma_Z$ mesurées par les accéléromètres transverses, les écartométries $\varepsilon_y$ et $\varepsilon_z$ mesurées par l'écartomètre et les angles de braquage $\delta_m$ et $\delta_n$ des gouvernes commandant le mouvement de la munition 10.

1. vitesses de rotation :

$$\begin{cases} q_s = q \cdot \cos\varphi - r \cdot \sin\varphi \\ r_s = q \cdot \sin\varphi + r \cdot \cos\varphi \end{cases}$$

2. accélérations :

$$\begin{cases} \Gamma_{Ys} = \Gamma_Y \cdot \cos\varphi - \Gamma_Z \cdot \sin\varphi \\ \Gamma_{Zs} = \Gamma_Y \cdot \sin\varphi + \Gamma_Z \cdot \cos\varphi \end{cases}$$

3. écartométries :

$$\begin{cases} \varepsilon_{ys} = \varepsilon_y \cdot \cos\varphi - \varepsilon_z \cdot \sin\varphi \\ \varepsilon_{zs} = \varepsilon_y \cdot \sin\varphi + \varepsilon_z \cdot \cos\varphi \end{cases}$$

4. braquages de gouvernes :

$$\begin{cases} \delta_{ms} = \delta_m \cdot \cos\varphi - \delta_n \cdot \sin\varphi \\ \delta_{ns} = \delta_m \cdot \sin\varphi + \delta_n \cdot \cos\varphi \end{cases}$$

Par extension, on appelle « mesures» les variables $q_s$, $r_s$, $\Gamma_{Ys}$, $\Gamma_{Zs}$, $\varepsilon_{ys}$, $\varepsilon_{zs}$, $\delta_{ms}$, et $\delta_{ns}$, qui résultent en réalité de la projection des mesures réelles q, r, $\Gamma_Y$, $\Gamma_Z$, $\varepsilon_y$, $\varepsilon_z$, $\delta_m$, et $\delta_n$, dans le repère semi-lié.

Avantageusement, l'invention utilise des filtres de Kalman pour estimer la vitesse de rotation $\vec{\Omega}_{MB}$ de la droite munition-but 5. Pour mettre en oeuvre ces filtres de Kalman, des modèles comportementaux des variables qui interviennent dans le calcul de la vitesse $\overline{\Omega}_{MB}$ doivent être établis. Ces modèles concernent :

- l'incidence, qui est l'angle représentant l'écart angulaire entre l'axe 20 de la munition et son vecteur vitesse, représentée par deux angles $\alpha$ et $\beta$ ;
- les vitesses angulaires de la munition autour de son centre de gravité définie par les composantes vitesse p, q, r autour des trois axes $\vec{x}$, $\vec{y}$ et $\vec{z}$ du repère lié ;
- les angles d'écartométrie $\varepsilon_y$, $\varepsilon_z$ et ;
- la vitesse de rotation munition-but $\vec{\Omega}_{MB}$ proprement dite.

Ces modèles sont établis par les équations qui suivent. Dans ces modèles, les grandeurs chapeautées par un point, exemple $\dot{\alpha}$, et par deux points, exemple $\ddot{\alpha}$ représentent respectivement la dérivée première et la dérivée seconde de la grandeur par rapport au temps.

Incidence

L'équation des forces $m \cdot \dfrac{d\overline{V}}{dt} = \vec{F}$ s'écrit dans le repère semi-lié :

$$\begin{cases} m \cdot (\dot{U}_s + q_s w_s - r_s v_s) = -\overline{q}SC_x + F_{xs} \\ m \cdot (\dot{v}_s + r_s U_s) = \overline{q}S \cdot (- C_{z\alpha} \cdot \beta_s + C_{z\delta} \cdot \delta_{ns}) \\ m \cdot (\dot{w}_s - q_s U_s) = -\overline{q}S \cdot (C_{z\alpha} \cdot \alpha_s + C_{z\delta} \cdot \delta_{ms}) + mg \cdot \cos\theta \end{cases}$$

$U_s, v_s, w_s$ étant les coordonnées du vecteur vitesse de la munition dans le repère semi-lié.
Avec l'hypothèse de petites incidences, on peut faire l'approximation :

$$\begin{cases} U_s = V \\ v_s = V \cdot \beta_s \\ w_s = V \cdot \alpha_s \end{cases}$$

Les deux dernières équations du modèle s'écrivent alors :

$$\boxed{\begin{aligned} \dot{\beta}_s &= -r_s - \left(\omega_0 + \frac{\dot{V}}{V}\right) \cdot \beta_s + a\omega_0.\delta_{ns} \\ \dot{\alpha}_s &= q_s - \left(\omega_0 + \frac{\dot{V}}{V}\right) \cdot \alpha_s - a\omega_0.\delta_{ms} + \frac{g}{V} \cdot \cos\theta \end{aligned}} \qquad (1)$$

Vitesses angulaires

L'équation des moments $\dfrac{d \cdot J\vec{\Omega}}{dt} = \vec{M}$ s'écrit dans le repère semi-lié :

$$\begin{cases} A \cdot \dot{p}_s = -\dfrac{\overline{q}Sd^2}{V} C_{lp} \cdot p_s + \overline{q}SdC_{l0} + M_{xs} \\ B \cdot \dot{q}_s + A \cdot r_s P_s - B \cdot R_s p_s = \overline{q}Sd \cdot \left(C_{m\alpha} \cdot \alpha_s + \dfrac{l}{V}C_{mq} \cdot q_s\right) + \overline{q}Sd \cdot C_{m\delta} \cdot \delta_{ms} \\ B \cdot \dot{r}_s + B \cdot P_s q_s - A \cdot \dot{p}_s Q_s = \overline{q}Sd \cdot \left(-C_{m\alpha} \cdot \beta_s + \dfrac{l}{V}C_{mq} \cdot r_s\right) + \overline{q}Sd \cdot C_{m\delta} \cdot \delta_{ns} \end{cases}$$

Or:

$$\begin{cases} P_s = -\dot{\psi} \cdot \sin\theta \\ Q_s = q_s \\ R_s = r_s \end{cases}$$

Enfin, on néglige $\dot{\psi} \cdot \sin\theta$ devant $f_q$.
Les deux dernières équations du modèle s'écrivent :

$$\boxed{\begin{aligned} \dot{q}_s &= -K_\alpha \cdot \alpha_s - f_q \cdot q_s - k \cdot r_s p_s - K_\alpha b \cdot \delta_{ms} \\ \dot{r}_s &= K_\alpha \cdot \beta_s - f_q \cdot r_s + k \cdot p_s q_s - K_\alpha b \cdot \delta_{ns} \end{aligned}} \qquad (2)$$

Ecartométries

Soit $\vec{u}$ vecteur unitaire tel que $\overrightarrow{MB} = R \cdot \vec{u}$. Le vecteur vitesse de rotation de la droite munition-but s'écrit :

$$\vec{\Omega}_{MB} = \vec{u} \wedge \left( \frac{d\vec{u}}{dt} \right)_{R_0}$$

On ne considérera par la suite que les développements au premier ordre en $\varepsilon_{ys}$ et $\varepsilon_{zs}$. Dans le repère semi-lié $R_s$, $\vec{u}$ s'écrit :

$$\vec{u} = \begin{bmatrix} \cos \varepsilon_{ys} \cdot \cos \varepsilon_{zs} \\ \cos \varepsilon_{ys} \cdot \sin \varepsilon_{zs} \\ -\sin \varepsilon_{ys} \end{bmatrix}_{R_s} \approx \begin{bmatrix} 1 \\ \varepsilon_{zs} \\ -\varepsilon_{ys} \end{bmatrix}_{R_s}$$

Soit $\vec{\Omega}_s$ le vecteur rotation du repère semi-lié $R_s$ par rapport au repère terrestre $R_0$. Par définition :

$$\vec{\Omega}_s = \begin{bmatrix} -\dot{\psi} \cdot \sin \theta \\ q_s \\ r_s \end{bmatrix}_{R_s}$$

$\dot{\psi} \cdot \sin \theta$ est également considéré comme un premier ordre.

La dérivée de $\vec{u}$ dans le repère terrestre Ro est :

$$\left( \frac{d\vec{u}}{dt} \right)_{R_0} = \left( \frac{d\vec{u}}{dt} \right)_{R_s} + \vec{\Omega}_s \wedge \vec{u}$$

$$\left( \frac{d\vec{u}}{dt} \right)_{R_s} \approx \begin{bmatrix} 0 \\ \dot{\varepsilon}_{zs} \\ -\dot{\varepsilon}_{ys} \end{bmatrix}_{R_s}$$

et

$$\vec{\Omega}_s \wedge \vec{u} \approx \begin{bmatrix} -q_s \cdot \varepsilon_{ys} - r_s \cdot \varepsilon_{zs} \\ r_s \\ -q_s \end{bmatrix}_{R_s}$$

En développant l'expression de $\vec{\Omega}_{MB}$ :

$$\vec{\Omega}_{MB} = \vec{u} \wedge \left( \frac{d\vec{u}}{dt} \right)_{R_0} = \vec{u} \wedge \left( \left( \frac{d\vec{u}}{dt} \right)_{R_s} + \vec{\Omega}_s \wedge \vec{u} \right),$$

on obtient les composantes de $\vec{\Omega}_{MB}$ sur les axes $\vec{y}_s$ et $\vec{z}_s$ du repère semi-lié $R_s$ :

$$\begin{cases} \vec{\Omega}_{MB} \cdot \vec{y}_s = \dot{\varepsilon}_{ys} + q_s \\ \vec{\Omega}_{MB} \cdot \vec{z}_s = \dot{\varepsilon}_{zs} + r_s \end{cases}$$

D'autre part, par définition : $\dot{\eta}_{ys} = \vec{\Omega}_{MB} \cdot \vec{y}_s$ et $\dot{\eta}_{zs} = \vec{\Omega}_{MB} \cdot \vec{z}_s$. Finalement les équations du modèle s'écrivent :

$$\boxed{\begin{aligned} \dot{\varepsilon}_{ys} &= \dot{\eta}_{ys} - q_s \\ \dot{\varepsilon}_{zs} &= \dot{\eta}_{zs} - r_s \end{aligned}} \qquad\qquad (3)$$

Vitesse de rotation de la droite munition-but

$$\vec{MB} = R \cdot \vec{u}$$

$$\left( \frac{d^2 \vec{MB}}{dt^2} \right)_{R_0} = \ddot{R} \cdot \vec{u} + 2 \cdot \dot{R} \cdot \left( \frac{d\vec{u}}{dt} \right)_{R_0} + R \cdot \left( \frac{d^2 \vec{u}}{dt^2} \right)_{R_0}$$

Or:

$$\left( \frac{d\vec{u}}{dt} \right)_{R_0} = \vec{\Omega}_{MB} \wedge \vec{u}$$

$$\left( \frac{d^2 \vec{u}}{dt^2} \right)_{R_0} = \left( \frac{d\vec{\Omega}_{MB}}{dt} \right)_{R_0} \wedge \vec{u} - \Omega_{MB}^2 \cdot \vec{u}$$

En conséquence :

$$\left(\frac{d^2 \overrightarrow{MB}}{dt^2}\right)_{R_0} = \left(\ddot{R} - R.\,\Omega_{MB}{}^2\right)\cdot\vec{u} + 2\cdot\dot{R}\cdot\overrightarrow{\Omega}_{MB}\wedge\vec{u} + R\cdot\left(\frac{d\overrightarrow{\Omega}_{MB}}{dt}\right)_{R_0}\wedge\vec{u}$$

Un développement de $\vec{u}$ au premier ordre en $\varepsilon_{ys}$ et $\varepsilon_{zs}$ donne :

$$\vec{u} \approx \begin{bmatrix} 1 \\ \varepsilon_{zs} \\ -\varepsilon_{ys} \end{bmatrix}_{R_s}$$

$$\overrightarrow{\Omega}_{MB} = \begin{bmatrix} 0 \\ \dot{\eta}_{ys} \\ \dot{\eta}_{zs} \end{bmatrix}_{R_s} \qquad \text{d'où :}\ \Omega_{MB}{}^2 = \dot{\eta}_{ys}{}^2 + \dot{\eta}_{zs}{}^2$$

Donc:

$$\overrightarrow{\Omega}_{MB} \wedge \vec{u} = \begin{bmatrix} -\varepsilon_{ys}\cdot\dot{\eta}_{ys} + \varepsilon_{zs}\cdot\dot{\eta}_{zs} \\ \dot{\eta}_{zs} \\ -\dot{\eta}_{ys} \end{bmatrix}_{R_s}$$

Enfin :

$$\left(\frac{d\overrightarrow{\Omega}_{MB}}{dt}\right)_{R_0} = \left(\frac{d\overrightarrow{\Omega}_{MB}}{dt}\right)_{R_s} + \overrightarrow{\Omega}_s \wedge \overrightarrow{\Omega}_{MB}$$

$$= \begin{bmatrix} 0 \\ \ddot{\eta}_{ys} \\ \ddot{\eta}_{zs} \end{bmatrix}_{R_s} + \begin{bmatrix} 0 \\ q_s \\ r_s \end{bmatrix}_{R_s} \wedge \begin{bmatrix} 0 \\ \dot{\eta}_{ys} \\ \dot{\eta}_{zs} \end{bmatrix}_{R_s}$$

soit :

$$\left(\frac{d\overrightarrow{\Omega}_{MB}}{dt}\right)_{R_0} = \begin{bmatrix} q_s\cdot\dot{\eta}_{zs} - r_s\cdot\dot{\eta}_{ys} \\ \ddot{\eta}_{ys} \\ \ddot{\eta}_{zs} \end{bmatrix}_{R_s}$$

Et :

$$\left(\frac{d\vec{\Omega}_{MB}}{dt}\right)_{R_0} \wedge \vec{u} = \begin{bmatrix} -\ddot{\eta}_{ys} \cdot \varepsilon_{ys} - \ddot{\eta}_{zs} \cdot \varepsilon_{zs} \\ \ddot{\eta}_{zs} - \varepsilon_{ys} \cdot (q_s \cdot \dot{\eta}_{zs} - r_s \cdot \dot{\eta}_{ys}) \\ -\ddot{\eta}_{ys} + \varepsilon_{zs} \cdot (q_s \cdot \dot{\eta}_{zs} - r_s \cdot \dot{\eta}_{ys}) \end{bmatrix}_{R_s}$$

Soit, au premier ordre en $q_s$, $r_s$, $\varepsilon_{ys}$ et $\varepsilon_{zs}$ :

$$\left(\frac{d\vec{\Omega}_{MB}}{dt}\right)_{R_0} \wedge \vec{u} \approx \begin{bmatrix} 0 \\ \ddot{\eta}_{zs} \\ -\ddot{\eta}_{ys} \end{bmatrix}_{R_s}$$

L'accélération $\dfrac{d^2\overrightarrow{MB}}{dt^2}$ s'écrit donc :

$$\left(\frac{d^2\overrightarrow{MB}}{dt^2}\right)_{R_0} = \begin{bmatrix} \ddot{R} - R \cdot (\dot{\eta}_{ys}^2 + \dot{\eta}_{zs}^2) - 2\dot{R} \cdot (\varepsilon_{ys} \cdot \dot{\eta}_{ys} - \varepsilon_{zs} \cdot \dot{\eta}_{zs}) \\ 2\dot{R} \cdot \dot{\eta}_{zs} + R \cdot \ddot{\eta}_{zs} + \ddot{R} \cdot \varepsilon_{zs} \\ -2\dot{R} \cdot \dot{\eta}_{ys} - R \cdot \ddot{\eta}_{ys} - \ddot{R} \cdot \varepsilon_{ys} \end{bmatrix}_{R_s}$$

D'autre part, en faisant l'hypothèse d'un but fixe, ou lentement mobile par rapport à la munition :

$$\frac{d^2\overrightarrow{MB}}{dt^2} = \overrightarrow{\Gamma}_B - \overrightarrow{\Gamma}_M \approx -\overrightarrow{\Gamma}_M$$

$\overrightarrow{\Gamma}_M$ résulte de la somme des actions de pesanteur, des actions aérodynamiques dont les actions de pilotage, et d'une éventuelle poussée propulsive. Les actions de pilotage s'expriment classiquement en fonction des braquages et des incidences :

$$\overrightarrow{\Gamma}_M = \begin{bmatrix} -g \cdot \sin\theta + (F_{propu} - \overline{q}SC_x)/m \\ \omega_0 V.(-\beta_s + a.\delta_{ns}) \\ g \cdot \cos\theta - \omega_0 V.(\alpha_s + a.\delta_{ms}) \end{bmatrix}_{R_s}$$

Les deux dernières équations s'écrivent finalement :

$$2\dot{R}.\dot{\eta}_{zs} + R.\ddot{\eta}_{zs} + \ddot{R} \cdot \varepsilon_{zs} = \omega_0 V.(\beta_s - a.\delta_{ns})$$

$$- 2\,\dot{R}.\dot{\eta}_{ys} - R.\,\ddot{\eta}_{ys} - \ddot{R}\cdot\varepsilon_{ys} = \omega_0 V.(\,\alpha_s + a.\,\delta_{ms}\,) - g\cdot\cos\theta$$

Enfin, avec l'hypothèse d'une vitesse cible faible devant la vitesse de la munition, on peut faire l'approximation : $\dot{R} = -V$. D'où finalement, les équations du modèle qui s'écrivent :

$$
\begin{cases}
\ddot{\eta}_{zs} = \omega_0\,\dfrac{V}{R}.\beta_s - a\,\omega_0\,\dfrac{V}{R}.\delta_{ns} + 2\,\dfrac{V}{R}.\dot{\eta}_{zs} + \dfrac{\dot{V}}{R}\cdot\varepsilon_{zs} \\[3mm]
\ddot{\eta}_{ys} = -\omega_0\,\dfrac{V}{R}.\alpha_s - a\,\omega_0\,\dfrac{V}{R}.\delta_{ms} + \dfrac{g}{R}\cdot\cos\theta + 2\,\dfrac{V}{R}.\dot{\eta}_{ys} + \dfrac{\dot{V}}{R}\cdot\varepsilon_{ys}
\end{cases}
\tag{4}
$$

Les systèmes d'équations (1), (2), (3) et (4) des modèles précédents permettent de mettre en place quatre filtres de Kalman, deux dans chaque plan, deux dans le plan de tangage et deux dans le plan de lacet.

Dans le plan de lacet :

- un premier filtre permet d'effectuer l'estimation de $r_s$ et de $\beta_s$ à l'aide des « mesures » $r_s$ et $\delta_{ns}$, ce filtre sera appelé par la suite filtre lacet 1, $r_s$ est la vitesse de rotation de la munition autour de l'axe $z_s$ et est l'expression du mouvement de la munition dans son plan de lacet ;
- un deuxième filtre permet d'effectuer l'estimation de $\varepsilon_{zs}$ et de $\dot{\eta}_{zs}$ à l'aide des « mesures » $\varepsilon_{zs}$ et $\delta_{ns}$ et des variables estimées par le premier filtre, ce deuxième filtre sera appelé par la suite filtre lacet 2.

Dans le plan de tangage

- un premier filtre permet d'effectuer l'estimation de $q_s$ et de $\alpha_s$ à l'aide des « mesures » $q_s$ et $\delta_{ms}$, ce filtre sera appelé par la suite filtre tangage 1, $q_s$ est la vitesse de rotation de la munition autour de l'axe $y_s$ et est l'expression du mouvement de la munition dans son plan de tangage ;
- un deuxième filtre permet d'effectuer l'estimation de $\varepsilon_{ys}$ et de $\dot{\eta}_{ys}$ à l'aide des « mesures » $\varepsilon_{ys}$ et $\delta_{ms}$ et des variables estimées par le premier filtre, ce deuxième filtre sera appelé par la suite filtre tangage 2.

Une variante consiste :
Dans le plan de lacet :

- à effectuer par le premier filtre l'estimation de $r_s$ et de $\beta_s$ à l'aide des « mesures » $\Gamma_{Ys}$ et $\delta_{ns}$ ;

Dans le plan de tangage

- à effectuer par le premier filtre l'estimation de $q_s$ et de $\alpha_s$ à l'aide des « mesures » $\Gamma_{Zs}$ et $\delta_{ms}$.

Pour cette variante, les équations de mesure s'écrivent :
Accélérations non gravitationelles du point N :

$$
\begin{cases}
\Gamma_{Ys} = -\omega_0 V\cdot\beta_s + a\omega_0 V.\delta_{ns} + (-q_s\dot{\psi}\sin\theta + \dot{r}_s)\cdot x_N \\[2mm]
\Gamma_{Zs} = -\omega_0 V\cdot\alpha_s - a\omega_0 V.\delta_{ms} + (-r_s\dot{\psi}\sin\theta - \dot{q}_s)\cdot x_N
\end{cases}
$$

D'où en négligeant $\dot{\psi}\cdot\sin\theta$ et en remplaçant $\dot{q}_s$ et $\dot{r}_s$ par leur expressions (2) :

$$
\begin{cases}
\Gamma_{Ys} = (-\omega_0 V + K_\alpha x_N)\cdot\beta_s - f_q x_N\cdot r_s + (a\omega_0 V - K_\alpha b x_N).\delta_{ns} + k x_N\cdot p_s q_s \\[2mm]
\Gamma_{Zs} = (-\omega_0 V + K_\alpha x_N)\cdot\alpha_s + f_q x_N\cdot q_s + (-a\omega_0 V + K_\alpha b x_N).\delta_{ms} + k x_N\cdot r_s p_s
\end{cases}
$$

**EP 1 785 688 B1**

Un filtre de Kalman est défini par :

- ■ un vecteur d'état X,
- ■ une matrice d'évolution A,
- ■ un vecteur de commande B,
- ■ une matrice d'observation C,
- ■ un vecteur de mesure Y.

tels que :

$$\begin{cases} \dot{X} = A.X + B + W \\ Y = C.X + V \end{cases}$$

où : W est un vecteur de bruit de modèle et V un vecteur de bruit de mesure.
Les algorithmes de propagation et de recalage du filtre de Kalman ne sont pas rappelés ici.
Les quatre filtres de Kalman utilisés par un dispositif selon l'invention sont décrits ci-après.

Filtre de lacet 1 :

Ce filtre réalise l'estimation de $r_s$ et de $\beta_s$ à l'aide des « mesures » $r_s$ et $\delta_{ns}$:

$$\begin{cases} \dot{\beta}_s = -r_s - \left(\omega_{.0} + \dfrac{\dot{V}}{V}\right) \cdot \beta_s + a\omega_0.\delta_{ns} \\ \dot{r}_s = K_\alpha \cdot \beta_s - f_q \cdot r_s + k \cdot p_s q_s - K_\alpha b \cdot \delta_{ns} \end{cases}$$

Le vecteur d'état est :

$$X = \begin{bmatrix} \beta_s \\ r_s \end{bmatrix}$$

La matrice d'évolution est :

$$A = \begin{bmatrix} -\left(\omega_0 + \dfrac{\dot{V}}{V}\right) & -1 \\ K_\alpha & -f_q \end{bmatrix}$$

Le vecteur de commande est :

$$B = \begin{bmatrix} a\omega_0.\delta_{ns} \\ k \cdot p_s q_s - K_\alpha b \cdot \delta_{ns} \end{bmatrix}$$

La matrice d'observation est : C = [0 1]
Le vecteur de mesure est :Y = [$r_s$]
Le terme $k \cdot p_s q_s$ du vecteur de commande peut être calculé notamment à partir de :

-    l'estimation de $q_s$ fournie par le filtre tangage 1,

**12**

- une mesure de la vitesse de roulis, ou bien la connaissance a priori de la courbe de roulis de la munition.

Dans le cas d'une munition à vitesse de roulis faible, il est possible par exemple de négliger ce terme, qui sera alors perçu comme un bruit de modèle.

Dans une variante du filtre 1, ce filtre réalise l'estimation de $r_s$ et de $\beta_s$ à l'aide des « mesures » $\Gamma_{Ys}$ et $\delta_{ns}$ :

$$\begin{cases} \dot{\beta}_s = -r_s - \left(\omega_0 + \dfrac{\dot{V}}{V}\right)\cdot\beta_s + a\omega_0.\delta_{ns} \\ \dot{r}_s = K_\alpha\cdot\beta_s - f_q\cdot r_s + k\cdot p_s q_s - K_\alpha b\cdot\delta_{ns} \end{cases}$$

Le vecteur d'état est :

$$X = \begin{bmatrix} \beta_s \\ r_s \end{bmatrix}$$

La matrice d'évolution est :

$$A = \begin{bmatrix} -\left(\omega_0 + \dfrac{\dot{V}}{V}\right) & -1 \\ K_\alpha & -f_q \end{bmatrix}$$

Le vecteur de commande est :

$$B = \begin{bmatrix} a\omega_0.\delta_{ns} \\ k\cdot p_s q_s - K_\alpha b\cdot\delta_{ns} \end{bmatrix}$$

La matrice d'observation est :

$$C = \begin{bmatrix} -\omega_0 V + K_\alpha x_N & -f_q x_N \end{bmatrix}$$

Le vecteur de mesure est :

$$Y = \begin{bmatrix} \Gamma_{Ys} - (a\omega_0 V - K_\alpha b x_N).\delta_{ns} - kx_N\cdot p_s q_s \end{bmatrix}$$

Les termes $k\cdot p_s q_s$ du vecteur de commande et $-kx_N\cdot p_s q_s$ du vecteur de mesure peuvent être calculés notamment à partir de :

- l'estimation de $q_s$ fournie par le filtre tangage 1,
- une mesure de la vitesse de roulis, ou bien la connaissance a priori de la courbe de roulis de la munition.

Dans le cas d'une munition à vitesse de roulis faible, il est possible par exemple de négliger ces termes.
Les composantes du vecteur d'état X obtenu par ce premier filtre seront injectées comme paramètres d'entrée du filtre suivant, en vue d'obtenir la composante du vecteur rotation $\overline{\Omega}_{MB}$ dans le plan de lacet.

Filtre de lacet 2

Ce filtre réalise l'estimation de $\varepsilon_{zs}$ et de $\dot{\eta}_{zs}$ à l'aide des « mesures » $\varepsilon_{zs}$ et $\delta_{ns}$ et des variables estimées par le filtre 1 :

$$\begin{cases} \ddot{\eta}_{zs} = \omega_0 \dfrac{V}{R}.\beta_s - a\omega_0 \dfrac{V}{R}.\delta_{ns} + 2\dfrac{V}{R}.\dot{\eta}_{zs} + \dfrac{\dot{V}}{R}.\varepsilon_{zs} \\ \dot{\varepsilon}_{zs} = \dot{\eta}_{zs} - r_s \end{cases}$$

Le vecteur d'état est :

$$X = \begin{bmatrix} \dot{\eta}_{zs} \\ \varepsilon_{zs} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} \omega_0 \dfrac{V}{R}.\beta_s - a\omega_0 \dfrac{V}{R}.\delta_{ns} \\ -r_s \end{bmatrix}$$

La matrice d'observation est : C = [0 1]
Le vecteur de mesure : Y = [$\varepsilon_{zs}$]
Le vecteur d'état X obtenu par ce filtre de Kalman, permet par sa première composante d'obtenir la composante $\dot{\eta}_{zs}$ du vecteur rotation $\overline{\Omega}_{MB}$ dans le repère semi-lié. Cette composante $\dot{\eta}_{zs}$ définit la vitesse de rotation de la droite 5 autour de l'axe $z_s$. Elle définit aussi la composante de cette vitesse dans le plan de lacet de la munition.

Filtre de tangage 1

Ce filtre réalise l'estimation de $q_s$ et de $\alpha_s$ à l'aide des « mesures » $q_s$ et $\delta_{ms}$ :

$$\begin{cases} \dot{\alpha}_s = q_s - \left(\omega_0 + \dfrac{\dot{V}}{V}\right)\cdot\alpha_s - a\omega_0.\delta_{ms} + \dfrac{g}{V}\cdot\cos\theta \\ \dot{q}_s = -K_\alpha \cdot \alpha_s - f_q \cdot q_s - k \cdot r_s p_s - K_\alpha b \cdot \delta_{ms} \end{cases}$$

Le vecteur d'état est :

$$X = \begin{bmatrix} \alpha_s \\ q_s \end{bmatrix}$$

La matrice d'évolution est :

$$A = \begin{bmatrix} -\left(\omega_0 + \dfrac{\dot{V}}{V}\right) & 1 \\ -K_\alpha & -f_q \end{bmatrix}$$

Le vecteur de commande est :

$$B = \begin{bmatrix} -a\omega_0.\delta_{ms} + \dfrac{g}{V} \cdot \cos\theta \\ -k \cdot r_s p_s - K_\alpha b \cdot \delta_{ms} \end{bmatrix}$$

La matrice d'observation est : C = [0 1]

Le vecteur de mesure est : Y = [$q_s$]

Le terme -k · $r_s p_s$ du vecteur de commande appelle la même remarque que celle présentée relativement au filtre de lacet 1. Il est à noter que pour l'assiette θ de la munition, plusieurs solutions sont envisageables :

- étant donné la connaissance de la trajectoire balistique théorique, on peut utiliser l'assiette qu'aurait la munition à cet instant sur cette trajectoire ;
- en cas de trajectoire très plate, on peut faire l'approximation θ = 0 ;
- on peut négliger totalement les termes de pesanteur, ils seront alors perçus comme des bruits de modèle ;
- enfin, on peut calculer l'assiette par intégration directe de l'estimation de $q_s$ : $\dot{\theta} = q_s$.

Dans une variante du filtre 1, ce filtre réalise l'estimation de $q_s$ et de $\alpha_s$ à l'aide des « mesures » $\Gamma_{Zs}$ et $\delta_{ms}$ :

$$\begin{cases} \dot{\alpha}_s = q_s - \left(\omega_0 + \dfrac{\dot{V}}{V}\right) \cdot \alpha_s - a\omega_0.\delta_{ms} + \dfrac{g}{V} \cdot \cos\theta \\ \dot{q}_s = -K_\alpha \cdot \alpha_s - f_q \cdot q_s - k \cdot r_s p_s - K_\alpha b \cdot \delta_{ms} \end{cases}$$

Le vecteur d'état est :

$$X = \begin{bmatrix} \alpha_s \\ q_s \end{bmatrix}$$

La matrice d'évolution est :

$$A = \begin{bmatrix} -\left(\omega_0 + \dfrac{\dot{V}}{V}\right) & 1 \\ -K_\alpha & -f_q \end{bmatrix}$$

Le vecteur de commande est :

$$B = \begin{bmatrix} -a\omega_0.\dot{\delta}_{ms} + \dfrac{g}{V}\cdot\cos\theta \\ -k\cdot r_s p_s - K_\alpha b\cdot\delta_{ms} \end{bmatrix}$$

La matrice d'observation est : $C = [-\omega_0 V + K_\alpha x_N \ f_q x_N]$
Le vecteur de mesure est : $Y = [\Gamma_{Zs} + (a\omega_0 V - K_\alpha b x_N).\delta_{ms} - k x_N \cdot r_s p_s]$
Les termes $-k\cdot r_s p_s$ du vecteur de commande et $-k x_N \cdot r_s p_s$ du vecteur de mesure appellent la même remarque que celle présentée relativement au filtre de lacet 1. Il est à noter que pour l'assiette $\theta$ de la munition, plusieurs solutions sont envisageables :

- étant donné la connaissance de la trajectoire balistique théorique, on peut utiliser l'assiette qu'aurait la munition à cet instant sur cette trajectoire ;
- en cas de trajectoire très plate, on peut faire l'approximation $\theta = 0$ ;
- on peut négliger totalement les termes de pesanteur, ils seront alors perçus comme des bruits de modèle ;
- enfin, on peut calculer l'assiette par intégration directe de l'estimation de $q_s$ : $\dot\theta = q_s$.

Les composantes du vecteur d'état X obtenu par ce filtre seront injectées comme paramètres d'entrée du filtre suivant, en vue d'obtenir la composante du vecteur rotation $\overline{\Omega}_{MB}$ dans le plan de tangage.

Filtre de tangage 2

Ce filtre réalise l'estimation de $\varepsilon_{ys}$ et de $\dot{\eta}_{ys}$ à l'aide des « mesures » $\varepsilon_{ys}$ et $\delta_{ms}$ et des variables estimées par le filtre 1 :

$$\begin{cases} \ddot{\eta}_{ys} = -\omega_0 \dfrac{V}{R}.\alpha_s - a\omega_0 \dfrac{V}{R}.\delta_{ms} + \dfrac{g}{R}\cdot\cos\theta + 2\dfrac{V}{R}.\dot{\eta}_{ys} + \dfrac{\dot{V}}{R}\cdot\varepsilon_{ys} \\ \dot{\varepsilon}_{ys} = \dot{\eta}_{ys} - q_s \end{cases}$$

Le vecteur d'état est :

$$X = \begin{bmatrix} \dot{\eta}_{ys} \\ \varepsilon_{ys} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} -\omega_0 \dfrac{V}{R}.\alpha_s - a\omega_0 \dfrac{V}{R}.\delta_{ms} + \dfrac{g}{R}\cdot\cos\theta \\ -q_s \end{bmatrix}$$

La matrice d'observation est : C = [0 1]

Le vecteur de mesure est : Y = [$\varepsilon_{ys}$]

Les remarques portées pour l'assiette θ de la munition lors de la description du filtre tangage 1 s'appliquent aussi pour le filtre tangage 2.

Le vecteur d'état X obtenu par ce filtre de Kalman, permet par sa première composante d'obtenir la composante $\dot{\eta}_{ys}$ du vecteur rotation $\overrightarrow{\Omega}_{MB}$ dans le repère semi-lié. Cette composante $\dot{\eta}_{ys}$ définit la vitesse de rotation de la droite 5 autour de l'axe $y_s$. Elle définit aussi la composante de cette vitesse dans le plan de tangage de la munition.

Le calcul des matrices d'évolution et des vecteurs de commande utilise la connaissance de l'évolution des paramètres $\omega_0$, $K_\alpha$ et $f_q$ ainsi que des variables V et R sur la trajectoire balistique théorique connue a priori. La connaissance de la trajectoire balistique théorique permet aussi d'initialiser les variables d'état des filtres de Kalman, notamment $\dot{\eta}_{ys}$, $\dot{\eta}_{zs}$, $\varepsilon_{ys}$ et $\varepsilon_{zs}$.

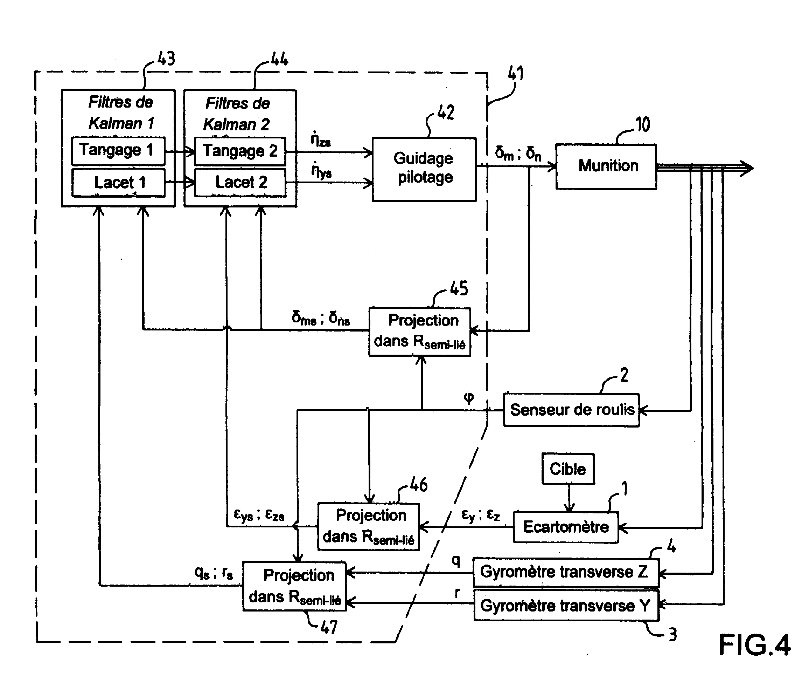

La figure 4 illustre par un synoptique un dispositif de guidage selon l'invention, incluant la mise en oeuvre de la mesure de vitesse de rotation de la droite munition-but à l'aide des filtres de Kalman telle que décrite précédemment. Le dispositif comporte un calculateur 41 qui comporte une fonction de guidage et de pilotage 42 de la munition 10. Ce calculateur met notamment en oeuvre le procédé selon l'invention.

La fonction de guidage 42 applique la loi de navigation proportionnelle telle que définie relativement à la relation (1) sur la base de la connaissance des vecteurs vitesse $\overline{V}_M$ et $\overline{V}_B$ et sur la base de la connaissance du vecteur $\overline{\Omega}_{MB}$. La fonction de guidage et de pilotage 42 délivre notamment les valeurs des angles $\delta_m$ et $\delta_n$ de braquage à appliquer sur les gouvernes. Ces informations $\delta_m$ et $\delta_n$ sont par exemple fournies sous forme numérique à des interfaces de commandes intégrées dans la munition 10, ces interfaces agissant sur l'orientation des gouvernes 21, 22, 23. La fonction de guidage 42 reçoit en entrée les composantes $\dot{\eta}_{ys}$ et $\dot{\eta}_{zs}$ du vecteur vitesse de rotation $\overline{\Omega}_{MB}$. Ces composantes $\dot{\eta}_{ys}$ et $\dot{\eta}_{zs}$ sont fournies par les filtres de Kalman qui sont par exemple implémentés dans le calculateur 41. Les composantes du vecteur vitesse de rotation sont référencées dans le repère semi-lié.

Comme indiqué précédemment, des premiers filtres de Kalman 43 permettent d'obtenir des premiers jeux de données utilisés par des deuxièmes filtres de Kalman 44 dont l'un donne la composante $\dot{\eta}_{zs}$ dans le plan de tangage et l'autre la composante $\dot{\eta}_{ys}$ dans le plan de lacet. Ces filtres de Kalman 43, 44 ont pour fonction de restituer les composantes du vecteur vitesse de rotation $\overline{\Omega}_{MB}$ de la droite munition-but 5, ces variables étant utiles au guidage 42 de la munition 10. Les autres variables nécessaires au guidage, les composantes des vecteurs vitesses $\overline{V}_M$ et $\overline{V}_B$, sont par ailleurs fournies au calculateur 41 de façon classique par des moyens non représentés.

La détermination des composantes $\dot{\eta}_{ys}$ et $\dot{\eta}_{zs}$ par les filtres de Kalman nécessite les mesures de divers paramètres fournies par le senseur de roulis 2, par l'écartomètre 1 et par les gyromètres transverses 3, 4. Ces mesures sont réalisées par rapport au repère lié. Dans le cas de la variante présentée précédemment, les gyromètres transverses 3, 4 sont remplacés par des accéléromètres transverses.

Le senseur de roulis capte l'angle de roulis φ de la munition. Les mesures faites par rapport au repère lié sont projetées dans le repère semi-lié à l'aide de cette mesure de roulis φ. Cette mesure est fournie, par exemple sous forme numérisée, au calculateur 41 qui réalise :

- la projection dans le repère semi-lié 45 des angles de braquage $\delta_m$, $\delta_n$ des gouvernes, ces angles sont lus en sortie de la fonction de guidage-pilotage 42 ;
- la projection dans le repère semi-lié 46 des angles d'écartométries $\varepsilon_y$, $\varepsilon_z$ mesurés par l'écartomètre 1 ;
- la projection dans le repère semi-lié 47 des vitesses de rotation q et r mesurées par les gyromètres transverses 3, 4. Dans le cas de la variante présentée précédemment, la projection s'applique aux mesures $\Gamma_Y$, $\Gamma_Z$ des accéléromètres transverses.

Les valeurs ainsi projetées dans le repère semi-lié sont ensuite utilisées dans les filtres de Kalman 43, 44. Les paramètres aérodynamiques de la munition ainsi que sa trajectoire balistique théorique sont par exemple mémorisés dans le calculateur 41.

Selon l'invention, la détermination des composantes du vecteur vitesse de rotation $\dot{\eta}_{ys}$, $\dot{\eta}_{zs}$ utilise dans chaque plan deux filtres de Kalman. Ainsi, dans chaque plan, de tangage ou de lacet, l'estimation de $\dot{\eta}_{ys}$ ou $\dot{\eta}_{zs}$ est faite par deux filtrages de Kalman successifs 43, 44, le premier utilisant une mesure gyrométrique et le second utilisant une mesure écartométrique. Cette séparation en plusieurs filtres de Kalman permet avantageusement de pouvoir différencier le fonctionnement de ces filtres d'une part en ce qui concerne les instants d'initialisation et d'autre part en ce qui concerne les fréquences de recalage. Plus particulièrement :

- Le premier filtre 43, utilisant une mesure de vitesse fournie par des gyromètres (ou des accéléromètres selon la variante) disponible dès le départ de la munition, peut-être initialisé très tôt sur la trajectoire, éventuellement dès le départ de la munition, ce qui permet d'accepter un temps de convergence du filtre important, et donc un meilleur filtrage des bruits de mesure. Le recalage de ce filtre peut être fait à fréquence élevée. Par conséquent, les gyromètres embarqués 3, 4 (ou les accéléromètres selon la variante) peuvent être de faible qualité, donc économiques ;

- Le deuxième filtre 44, utilisant une mesure écartométrique, ne peut être initialisé qu'à l'accrochage de l'écartomètre. Le recalage est fait à une fréquence qui peut être variable et pas nécessairement maîtrisée.

Le fait que le premier filtre 43 ait déjà convergé lors de l'initialisation du deuxième filtre 44 permet avantageusement de réduire le temps de convergence de ce deuxième filtre, c'est-à-dire le temps nécessaire à une bonne estimation des composantes $\dot{\eta}_{ys}$ et $\dot{\eta}_{zs}$ à partir de l'accrochage de l'écartomètre. Le guidage peut donc commencer plus tôt.

Un dispositif de guidage selon l'invention tel que décrit précédemment a notamment comme avantage d'être fiable et robuste. En particulier, l'écartomètre étant lié et non en mouvement en comparaison de l'autodirecteur, il n'y a pas de pièces mécaniquement mobiles. La résistance au choc est donc augmentée. Il est aussi économique car les coûts liés à la mécanique et à l'asservissement d'une partie mobile sont supprimés.

Le traitement effectué par un dispositif selon l'invention pour extraire la mesure de vitesse de rotation munition-but est notamment basé sur une bonne connaissance des paramètres aérodynamiques de la munition et de sa trajectoire balistique pour mettre en oeuvre les modèles comportementaux appliqués aux filtres de Kalman. Un tel dispositif a été décrit pour le guidage aérodynamique d'une munition ou plus généralement d'un projectile. Il peut néanmoins être appliqué à d'autres types de guidage.

**Revendications**

1. Procédé de détermination de la vitesse de rotation de la droite (5) reliant un projectile (10) à sa cible, **caractérisé en ce que** la vitesse de rotation étant déterminée par la convergence de filtres de Kalman fonction des paramètres aérodynamiques du projectile (10) opérant sur des mesures référencées dans un repère $x_s$, $y_s$, $z_s$ semi-lié au projectile dont l'axe $x_s$ est confondu avec l'axe (20) du projectile et tel que la verticale locale $z_o$ appartienne au plan $(x_s, z_s)$, les plans $x_s$, $y_s$ et $x_s$, $z_s$ définissant respectivement le plan de lacet et le plan de tangage du projectile (10) :

   - la composante $\dot{\eta}_{zs}$ du vecteur vitesse de rotation de ladite droite, selon l'axe $z_s$, dans le plan de lacet est estimée par l'utilisation successive de deux filtres de Kalman, un premier filtre (43) effectuant l'estimation de la vitesse de rotation $r_s$ et de l'incidence $\beta_s$ du projectile dans le plan de lacet en fonction de mesures de vitesse de rotation du projectile $p_s, q_s, r_s$ dans le repère semi-lié, un deuxième filtre (44) effectuant l'estimation de la composante $\dot{\eta}_{zs}$ en fonction de la composante $\varepsilon_{zs}$ dans le plan de lacet d'une mesure de l'écart angulaire entre la droite (5) et l'axe (20) du projectile d'une part et des estimations produites par le premier filtre d'autre part ;
   - la composante dans le plan de tangage $\dot{\eta}_{ys}$ du vecteur vitesse de rotation de ladite droite, selon l'axe $y_s$, est estimée par l'utilisation successive de deux filtres de Kalman, un premier filtre (43) effectuant l'estimation de la vitesse de rotation $q_s$ et de l'incidence $\alpha_s$ du projectile dans le plan de tangage en fonction de mesures de vitesse de rotation du projectile $p_s$, $q_s$, $r_s$ dans le repère semi-lié, un deuxième filtre (44) effectuant l'estimation de la composante $\dot{\eta}_{ys}$ en fonction de la composante $\varepsilon_{ys}$ dans le plan de tangage d'une mesure de l'écart angulaire entre la droite (5) et l'axe (20) du projectile d'une part et des estimations produites par le premier filtre d'autre part.

   les mesures de vitesse de rotation q, r du projectile et les mesures d'écart angulaire $\varepsilon_y$, $\varepsilon_z$ issues d'un écartomètre étant effectuées dans un repère x, y, z lié au projectile puis converties dans le repère semi-lié avant traitement par les filtres de Kalman.

2. Procédé selon la revendication 1, **caractérisé en ce que** les mesures d'accélération $\Gamma_Y$, $\Gamma_Z$ du projectile sont effectuées dans un repère x, y, z lié au projectile puis converties dans le repère semi-lié avant traitement par les filtres de Kalman.

3. Procédé selon l'une quelconque des revendications précédentes, **caractérisé en ce que** :

   - pour le premier filtre de Kalman dans le plan de lacet :

   Le vecteur d'état est :

$$X = \begin{bmatrix} \beta_s \\ r_s \end{bmatrix}$$

La matrice d'évolution est :

$$A = \begin{bmatrix} -\left(\omega_0 + \dfrac{\dot{V}}{V}\right) & -1 \\ K_\alpha & -f_q \end{bmatrix}$$

Le vecteur de commande est :

$$B = \begin{bmatrix} a\omega_0 . \delta_{ns} \\ k \cdot p_s q_s. - K_\alpha b \cdot \delta_{ns} \end{bmatrix}$$

La matrice d'observation est : C = [0 1]
Le vecteur de mesure est : Y = [$r_s$]

- pour le deuxième filtre de Kalman dans le plan de lacet :

Le vecteur d'état est :

$$X = \begin{bmatrix} \dot{\eta}_{zs} \\ \varepsilon_{zs} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} \omega_0 \dfrac{V}{R}.\beta_s - a\omega_0 \dfrac{V}{R}.\delta_{ns} \\ -r_s \end{bmatrix}$$

La matrice d'observation est : C = [0 1]
Le vecteur de mesure : Y = [$\varepsilon_{zs}$]

- pour le premier filtre de Kalman dans le plan de tangage :

Le vecteur d'état est :

$$X = \begin{bmatrix} \alpha_s \\ q_s \end{bmatrix}$$

La matrice d'évolution est :

$$A = \begin{bmatrix} -\left(\omega_0 + \dfrac{\dot{V}}{V}\right) & 1 \\ -K_\alpha & -f_q \end{bmatrix}$$

Le vecteur de commande est :

$$B = \begin{bmatrix} -a\dot{\omega}_0 \cdot \delta_{ms} + \dfrac{g}{V} \cdot \cos\theta \\ -k \cdot r_s p_s - K_\alpha b \cdot \delta_{ms} \end{bmatrix}$$

La matrice d'observation est : $C = [0\ 1]$
Le vecteur de mesure est : $Y = [q_s]$

- pour le deuxième filtre de Kalman dans le plan de tangage :

Le vecteur d'état est :

$$X = \begin{bmatrix} \dot{\eta}_{ys} \\ \dot{\varepsilon}_{ys} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} -\omega_0 \dfrac{V}{R} \cdot \alpha_s - a\omega_0 \dfrac{V}{R} \cdot \delta_{ms} + \dfrac{g}{R} \cdot \cos\theta \\ -q_s \end{bmatrix}$$

La matrice d'observation est : $C = [0\ 1]$
Le vecteur de mesure est : $Y = \begin{bmatrix} \varepsilon_{ys} \end{bmatrix}$

où :

- V représente la norme du vecteur vitesse $\overline{V}$ du projectile (10) ;
- $\dot{V}$ représente la dérivée de V par rapport au temps ;
- R représente la distance projectile-but ;
- g représente l'accélération de la pesanteur ;
- $\theta$ représente l'angle de tangage du projectile (10) ;
- $p_s, q_s, r_s$ représentent les composantes du vecteur vitesse de rotation du projectile (10) dans le repère semi-lié ;
- $\alpha_s$ et $\beta_s$ représentent les angles d'incidence du projectile (10) exprimés dans le repère semi-lié ;
- $\delta_{ms}$ et $\delta_{ns}$ représentent les angles de braquages appliqués aux gouvernes (21, 22, 23) du projectile exprimés dans le repère semi-lié et

$$f_q = -\frac{\overline{q}.S.d^2}{V.B} \cdot C_{mq} \quad ; \quad K_\alpha = -\frac{\overline{q}.S.d}{B} \cdot C_{m\alpha} \quad ; \quad \omega_0 = \frac{\overline{q}.S}{m.V} \cdot C_{z\alpha}$$

$$a = \frac{C_{z\delta}}{C_{z\alpha}} \quad ; \quad b = \frac{C_{m\delta}}{C_{m\alpha}} \quad ; \quad k = \frac{A}{B}$$

$\overline{q}$ étant la pression cinétique, d le calibre de la munition, S la surface de référence, A et B les inerties axiale et transverse, m la masse, et $C_{m\alpha}$, $C_{mq}$, $C_{m\delta}$, $C_{z\alpha}$, $C_{z\delta}$ les coefficients aérodynamiques de la munition.

4.  Procédé selon l'une quelconque des revendications précédentes, **caractérisé en ce que** :

- pour le premier filtre de Kalman dans le plan de lacet :

Le vecteur d'état est :

$$X = \begin{bmatrix} \beta_s \\ r_s \end{bmatrix}$$

La matrice d'évolution est :

$$A = \begin{bmatrix} -\left(\omega_0 + \dfrac{\dot{V}}{V}\right) & -1 \\ K_\alpha & -f_q \end{bmatrix}$$

Le vecteur de commande est :

$$B = \begin{bmatrix} a\omega_0.\delta_{ns} \\ k \cdot p_s q_s - K_\alpha b \cdot \delta_{ns} \end{bmatrix}$$

La matrice d'observation est : $C=[-\omega_0 V + K_\alpha X_N \text{ -}f_q X]$
Le vecteur de mesure est : $Y=[\Gamma_{Ys}\text{-}(a\omega_0 V\text{-}K_\alpha b x_N).\delta_{ns}\text{-}k x_N \cdot p_s q_s]$

- pour le deuxième filtre de Kalman dans le plan de lacet :

Le vecteur d'état est :

$$X = \begin{bmatrix} \dot{\eta}_{zs} \\ \varepsilon_{zs} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} \dot{\omega}_0 \dfrac{V}{R}.\beta_s - a\omega_0 \dfrac{V}{R}.\delta_{ns} \\ -r_s \end{bmatrix}$$

La matrice d'observation est : C = [0 1]
Le vecteur de mesure : $Y = [\varepsilon_{zs}]$

- pour le premier filtre de Kalman dans le plan de tangage :

Le vecteur d'état est :

$$X = \begin{bmatrix} \alpha_s \\ q_s \end{bmatrix}$$

La matrice d'évolution est :

$$A = \begin{bmatrix} -\left(\omega_0 + \dfrac{\dot{V}}{V}\right) & 1 \\ -K_\alpha & -f_q \end{bmatrix}$$

Le vecteur de commande est :

$$B = \begin{bmatrix} -a\omega_0.\delta_{ms} + \dfrac{g}{V}\cdot\cos\theta \\ -k\cdot r_s p_s - K_\alpha b\cdot\delta_{ms} \end{bmatrix}$$

La matrice d'observation est : $C=[-\omega_0 V+K_\alpha x_N \; f_q x_N]$
Le vecteur de mesure est : $Y=[\Gamma_{Zs}+(\alpha\omega_0 V-K_\alpha b x_N).\delta_{ms}-k x_N\cdot r_s p_s]$

- pour le deuxième filtre de Kalman dans le plan de tangage :

Le vecteur d'état est :

$$X = \begin{bmatrix} \dot{\eta}_{ys} \\ \varepsilon_{ys} \end{bmatrix}$$

La matrice d'évolution est :

$$A = \begin{bmatrix} 2\dfrac{V}{R} & \dfrac{\dot{V}}{R} \\ 1 & 0 \end{bmatrix}$$

Le vecteur de commande est :

$$B = \begin{bmatrix} -\omega_0 \dfrac{V}{R}.\alpha_s - a\omega_0 \dfrac{V}{R}.\delta_{ms} + \dfrac{g}{R}\cdot\cos\theta \\ -q_s \end{bmatrix}$$

La matrice d'observation est : $C = [0\ 1]$

Le vecteur de mesure est : $Y = {}_{L}\varepsilon_{ys}$

où :

- V représente la norme du vecteur vitesse $\overline{V}$ du projectile (10) ;
- $\dot{V}$ représente la dérivée de V par rapport au temps ;
- R représente la distance projectile-but ;
- g représente l'accélération de la pesanteur ;
- θ représente l'angle de tangage du projectile (10) ;
- $x_N$ représente l'abscisse du point de mesure N des accélérations transverses par rapport au centre de gravité du projectile (10) ;
- $p_s,q_s,r_s$ représentent les composantes du vecteur vitesse de rotation du projectile (10) dans le repère semi-lié ;
- $\alpha_s$ et $\beta_s$ représentent les angles d'incidence du projectile (10) exprimés dans le repère semi-lié ;
- $\delta_{ms}$ et $\delta_{ns}$ représentent les angles de braquages appliqués aux gouvernes (21, 22, 23) du projectile (10) exprimés dans le repère semi-lié et

$$f_q = -\frac{\overline{q}.S.d^2}{V.B}\cdot C_{mq} \quad ; \quad K_\alpha = -\frac{\overline{q}.S.d}{B}\cdot C_{m\alpha} \quad ; \quad \omega_0 = \frac{\overline{q}.S}{m.V}\cdot C_{z\alpha}$$

$$a = \frac{C_{Z\delta}}{C_{Z\alpha}} \quad ; \quad b = \frac{C_{m\delta}}{C_{m\alpha}} \quad ; \quad k = \frac{A}{B}$$

$\overline{q}$ étant la pression cinétique, d le calibre de la munition, S la surface de référence, A et B les inerties axiale et transverse, m la masse, et $C_{m\alpha}$, $C_{mq}$, $C_{m\delta}$, $C_{z\alpha}$, $C_{z\delta}$ les coefficients aérodynamiques de la munition.

5.  Dispositif de détermination de la vitesse de rotation de la droite (5) reliant un projectile (10) à sa cible, **caractérisé en ce qu'**il comporte au moins :

    - un écartométre (1) disposé à l'avant du projectile, mesurant les composantes $\varepsilon_y$, $\varepsilon_z$ de l'écart angulaire entre la droite (5) et l'axe (20) du projectile dans le repère lié ;
    - un senseur de roulis (2) mesurant le roulis φ du projectile ;
    - deux gyromètres transverses (3,4) disposés selon deux axes y, z orthogonaux du repère lié, mesurant les vitesses de rotation du projectile (10) autour de ces axes ;
    - un calculateur (41) mettant en oeuvre le procédé selon l'une quelconque des revendications précédentes, les mesures étant converties dans le repère semi-lié avant traitement par les filtres de Kalman (43, 44) au moyen de la mesure de l'angle de roulis φ.

6.  Dispositif de détermination de la vitesse de rotation de la droite (5) reliant un projectile (10) à sa cible, comportant au moins :

- un écartométre (1) disposé à l'avant du projectile, mesurant les composantes $\varepsilon_y$, $\varepsilon_z$ de l'écart angulaire entre la droite (5) et l'axe (20) du projectile dans le repère lié ;
- un senseur de roulis (2) mesurant le roulis $\varphi$ du projectile (10) ;
- deux accéléromètres transverses, mesurant les accélérations non gravitationelles d'un point de l'axe (20) du projectile (10) selon deux axes y, z orthogonaux du repère lié ;

**caractérisé en ce que** ledit dispositif comporte :

- un calculateur (41) mettant en oeuvre le procédé selon l'une quelconque des revendications 5, 6, 7 précédentes, les mesures étant converties dans le repère semi-lié avant traitement par les filtres de Kalman au moyen de la mesure de l'angle de roulis $\varphi$.

7.  Dispositif de guidage d'un projectile, **caractérisé en ce qu'**il comporte un dispositif de détermination de la vitesse de rotation de la droite (5) reliant un projectile (10) à sa cible selon l'une quelconque des revendications 6 ou 7 précédentes fournissant les composantes de la vitesse de rotation à un calculateur (42) appliquant une loi de navigation proportionnelle.

8.  Dispositif selon la revendication 7, **caractérisé en ce que** le projectile (10) est une munition.


**Claims**

1.  Method for determining the rotational speed of the line (5) connecting a projectile (10) to its target, **characterised in that** the rotational speed being determined by the convergence of Kalman filters as a function of the aerodynamic parameters of the projectile (10), operating on the basis of measurements referenced in a frame of reference $x_s$, $y_s$, $z_s$ semi-linked to the projectile, the axis $x_s$ of said frame of reference coinciding with the axis (20) of the projectile and said frame of reference being such that the local vertical $z_0$ belongs to the plane $(X_s, Z_s)$, the planes $x_s$, $y_s$ and $x_s$, $z_s$ defining the yaw plane and the pitch plane respectively of the projectile (10):

    - the component $\dot{\eta}_{zs}$ of the rotational speed vector of said line along the axis $z_s$, in the yaw plane is estimated by using two Kalman filters in succession, a first filter (43) estimating the rotational speed $r_s$ and the angle of attack $\beta_s$ of the projectile in the yaw plane as a function of measurements of the rotational speed $p_s$, $q_s$, $r_s$ of the projectile in the semi-linked frame of reference, a second filter (44) estimating the component $\dot{\eta}_{zs}$ as a function of the component $\varepsilon_{zs}$ in the yaw plane from a measurement of the angular displacement between the line (5) and the axis (20) of the projectile on the one hand and from estimates produced by the first filter on the other;
    - the component $\dot{\eta}_{ys}$, in the pitch plane, of the rotational speed vector of said line along the axis $y_s$ is estimated by using two Kalman filters in succession, a first filter (43) estimating the rotational speed $q_s$ and the angle of attack $\alpha_s$ of the projectile in the pitch plane as a function of measurements of the rotational speed $p_s$, $q_s$, $r_s$ of the projectile in the semi-linked frame of reference, a second filter (44) estimating the component $\dot{\eta}_{ys}$ as a function of the component $\varepsilon_{ys}$ in the pitch plane from a measurement of the angular displacement between the line (5) and the axis (20) of the projectile on the one hand and from estimates produced by the first filter on the other;
    the measurements of the rotational speed q, r of the projectile and the measurements of the angular displacement $\varepsilon_y$, $\varepsilon_z$ provided by a deviation sensor being made in a frame of reference x, y, z linked to the projectile then being converted into the semi-linked frame of reference before being processed using the Kalman filters.

2.  Method according to claim 1, **characterised in that** the measurements of acceleration $\Gamma_Y$, $\Gamma_Z$ of the projectile are made in a frame of reference x, y, z linked to the projectile then are converted into the semi-linked frame of reference before being processed using the Kalman filters.

3.  Method according to any one of the preceding claims, **characterised in that**:

    - for the first Kalman filter in the yaw plane:

        the state vector is:

$$X = \begin{bmatrix} \beta_s \\ r_s \end{bmatrix}$$

the evolution matrix is:

$$A = \begin{bmatrix} -\left(\omega_0 + \dfrac{\dot{V}}{V}\right) & -1 \\ K_\alpha & -f_q \end{bmatrix}$$

the control vector is:

$$B = \begin{bmatrix} a\omega_0 . \delta_{ns} \\ k \cdot p_s q_\varepsilon - K_\alpha b \cdot \delta_{ns} \end{bmatrix}$$

the observation matrix is: C= [0 1]
the measurement vector is: Y = [$r_s$]

- for the second Kalman filter in the yaw plane:

the state vector is:

$$X = \begin{bmatrix} \dot{\eta}_{zs} \\ \varepsilon_{zs} \end{bmatrix}$$

the evolution matrix is:

$$A = \begin{bmatrix} 2\dfrac{V}{R} & \dfrac{\dot{V}}{R} \\ 1 & 0 \end{bmatrix}$$

the control vector is:

$$B = \begin{bmatrix} \omega_0 \dfrac{V}{R} . \beta_s - a\omega_0 \dfrac{V}{R} . \delta_{ns} \\ -r_s \end{bmatrix}$$

the observation matrix is: C= [0 1]
the measurement vector is: Y = [$\varepsilon_{zs}$]

- for the first Kalman filter in the pitch plane:

the state vector is:

$$X = \begin{bmatrix} \alpha_s \\ q_s \end{bmatrix}$$

the evolution matrix is:

$$A = \begin{bmatrix} -\left( \omega_0 + \dfrac{\dot{V}}{V} \right) & 1 \\ -K_\alpha & -f_q \end{bmatrix}$$

the control vector is:

$$B = \begin{bmatrix} -a\omega_0 . \delta_{ms} + \dfrac{g}{V} \cdot \cos\theta \\ -k \cdot r_s p_s - K_\alpha b \cdot \delta_{ms} \end{bmatrix}$$

the observation matrix is: C = [0 1]
the measurement vector is: Y = [$q_s$]

- for the second Kalman filter in the pitch plane:

the state vector is:

$$X = \begin{bmatrix} \dot{n}_{ys} \\ \varepsilon_{ys} \end{bmatrix}$$

the evolution matrix is:

$$A = \begin{bmatrix} 2\dfrac{V}{R} & \dfrac{\dot{V}}{R} \\ 1 & 0 \end{bmatrix}$$

the control vector is:

$$B = \begin{bmatrix} -\omega_0 \dfrac{V}{R} . \alpha_s - a\omega_0 \dfrac{V}{R} . \delta_{ms} + \dfrac{g}{R} \cdot \cos\theta \\ -q_s \end{bmatrix}$$

the observation matrix is: C= [0 1]
the measurement vector is: Y= [$\varepsilon_{ys}$]

where:

- V represents the norm of the speed vector $\overline{V}$ of the projectile (10);
- $\dot{V}$ represents the derivative of V with respect to time;
- R represents the projectile-target distance;

- g represents gravitational acceleration;
- $\theta$ represents the pitch angle of the projectile (10);
- $p_s$, $q_s$, $r_s$ represent the components of the rotational speed vector of the projectile (10) in the semi-linked frame of reference;
- $\alpha_s$ and $\beta_s$ represent the angles of attack of the projectile (10), expressed in the semi-linked frame of reference;
- $\delta_{ms}$ and $\delta_{ns}$ represent the control surface angles applied to the control surfaces (21, 22, 23) of the projectile, expressed in the semi-linked frame of reference, and

$$f_q = -\frac{\overline{q}.S.d^2}{V.B} \cdot C_{mq} \quad ; \quad K_\alpha = -\frac{\overline{q}.S.d}{B} \cdot C_{m\alpha} \quad ; \quad \omega_0 = \frac{\overline{q}.S}{m.V} \cdot C_{z\alpha}$$

$$a = \frac{C_{z\delta}}{C_{z\alpha}} \quad ; \quad b = \frac{C_{m\delta}}{C_{m\alpha}} \quad ; \quad k = \frac{A}{B}$$

$\vec{q}$ being the kinetic pressure, d being the calibre of the ammunition, S being the reference area, A and B being axial and transverse inertia, m being the mass, and $C_{m\alpha}$, $C_{mq}$, $C_{m\delta}$, $C_{z\alpha}$, $C_{z\delta}$ being the aerodynamic coefficients of the ammunition.

4. Method according to any one of the preceding claims, **characterised in that**:

    - for the first Kalman filter in the yaw plane:

        the state vector is:

$$X = \begin{bmatrix} \beta_s \\ r_s \end{bmatrix}$$

        the evolution matrix is:

$$A = \begin{bmatrix} -\left(\omega_0 + \dfrac{\dot{V}}{V}\right) & -1 \\ K_\alpha & -f_q \end{bmatrix}$$

        the control vector is:

$$B = \begin{bmatrix} a\omega_0.\delta_{ns} \\ k \cdot p_s q_s - K_\alpha b \cdot \delta_{ns} \end{bmatrix}$$

        the observation matrix is: $C = [-\omega_0 V + K_\alpha x_N \ -f_q x_N]$
        the measurement vector is: $Y = [\Gamma_{Ys} - (a\omega_0 V - K_\alpha b x_N)\delta_{ns} - k x_N \cdot p_s q_s]$

    - for the second Kalman filter in the yaw plane:

        the state vector is:

$$X = \begin{bmatrix} \dot{\eta}_{zs} \\ \varepsilon_{zs} \end{bmatrix}$$

the evolution matrix is:

$$A = \begin{bmatrix} 2\dfrac{V}{R} & \dfrac{\dot{V}}{R} \\ 1 & 0 \end{bmatrix}$$

the control vector is:

$$B = \begin{bmatrix} \omega_0 \dfrac{V}{R}\cdot\beta_s - a\omega_0 \dfrac{V}{R}\cdot\delta_{ns} \\ -r_s \end{bmatrix}$$

the observation matrix is: C=[0 1]
the measurement vector is: $Y=[\varepsilon_{zs}]$

- for the first Kalman filter in the pitch plane:

the state vector is:

$$X = \begin{bmatrix} \alpha_s \\ q_s \end{bmatrix}$$

the evolution matrix is:

$$A = \begin{bmatrix} -\left(\omega_0 + \dfrac{\dot{V}}{V}\right) & 1 \\ -K_\alpha & -f_q \end{bmatrix}$$

the control vector is:

$$B = \begin{bmatrix} -a\omega_0\cdot\delta_{ms} + \dfrac{g}{V}\cdot\cos\theta \\ -k\cdot r_s p_s - K_\alpha b\cdot\delta_{ms} \end{bmatrix}$$

the observation matrix is: $C=[-\omega_0 V + K_\alpha X_N \quad f_q x_N]$
the measurement vector is: $Y=[\Gamma_{Zs} + (a\omega_0 V - K_\alpha b x_N)\cdot\delta_{ms} - k x_N\cdot r_s p_s]$

- for the second Kalman filter in the pitch plane:

the state vector is:

$$X = \begin{bmatrix} \dot{n}_{ys} \\ \varepsilon_{ys} \end{bmatrix}$$

the evolution matrix is:

$$A = \begin{bmatrix} 2\dfrac{V}{R} & \dfrac{\dot{V}}{R} \\ 1 & 0 \end{bmatrix}$$

the control vector is:

$$B = \begin{bmatrix} -\omega_0 \dfrac{V}{R}.\alpha_s - a\omega_0 \dfrac{V}{R}.\delta_{ms} + \dfrac{g}{R}.\cos\theta \\ -q_s \end{bmatrix}$$

the observation matrix is: C=[0 1]
the measurement vector is: Y= [$\varepsilon_{ys}$]

where:

- V represents the norm of the speed vector $\overline{V}$ of the projectile (10);
- $\dot{V}$ represents the derivative of V with respect to time;
- R represents the projectile-target distance;
- g represents gravitational acceleration;
- $\theta$ represents the pitch angle of the projectile (10);
- $X_N$ represents the x-coordinate of the measurement point N of transverse accelerations relative to the centre of gravity of the projectile (10);
- $p_s$, $q_s$, $r_s$ represent the components of the rotational speed vector of the projectile (10) in the semi-linked frame of reference;
- $\alpha_s$ and $\beta_s$ represent the angles of attack of the projectile (10), expressed in the semi-linked frame of reference;
- $\delta_{ms}$ and $\delta_{ns}$ represent the control surface angles applied to the control surfaces (21, 22, 23) of the projectile (10), expressed in the semi-linked frame of reference, and

$$f_q = -\frac{\overline{q}.S.d^2}{V.B}.C_{mq} \quad ; \quad K_\alpha = -\frac{\overline{q}.S.d}{B}.C_{m\alpha} \quad ; \quad \omega_0 = \frac{\overline{q}.S}{m.V}.C_{z\alpha}$$

$$a = \frac{C_{z\delta}}{C_{z\alpha}} \quad ; \quad b = \frac{C_{m\delta}}{C_{m\alpha}} \quad ; \quad k = \frac{A}{B}$$

$\overline{q}$ being the kinetic pressure, d being the calibre of the ammunition, S being the reference area, A and B being the axial and transverse inertia, m being the mass, and $C_{m\alpha}$, $C_{mq}$, $C_{m\delta}$, $C_{z\alpha}$, $C_{z\delta}$ being the aerodynamic coefficients of the ammunition.

**5.** Device for determining the rotational speed of the line (5) connecting a projectile (10) to the target thereof, **characterised in that** it comprises at least:

- a deviation sensor (1) arranged at the front of the projectile, measuring the components $\varepsilon_y$, $\varepsilon_z$ of the angular deviation between the line (5) and the axis (20) of the projectile in the linked frame of reference;
- a roll sensor (2) measuring the roll $\varphi$ of the projectile;
- two transverse rate gyros (3, 4) arranged along two orthogonal axes y, z of the linked frame of reference, measuring the rotational speeds of the projectile (10) about these axes;
- a computer (41) carrying out the method according to any one of the preceding claims, the measurements being converted into the semi-linked frame of reference before being processed by Kalman filters (43, 44) using the measurement of the roll angle $\varphi$.

6. Device for determining the rotational speed of the line (5) connecting a projectile (10) to the target thereof, comprising at least:

- a deviation sensor (1) arranged at the front of the projectile, measuring the components $\varepsilon_y$, $\varepsilon_z$ of the angular deviation between the line (5) and the axis (20) of the projectile in the linked frame of reference;
- a roll sensor (2) measuring the roll $\varphi$ of the projectile (10);
- two transverse accelerometers measuring the non-gravitational accelerations of a point on the axis (20) along two orthogonal axes y, z of the linked frame of reference;

**characterised in that** said device comprises:

- a computer (41) carrying out the method according to any one of the preceding claims 5, 6,7, the measurements being converted into the semi-linked frame of reference before being processed by Kalman filters using the measurement of the roll angle $\varphi$.

7. Device for guiding a projectile, **characterised in that** it comprises a device for determining the rotational speed of the line (5) connecting a projectile (10) to the target thereof according to either claim 6 or claim 7 which provides the components of the rotational speed to a computer (42) applying a proportional navigation law.

8. Device according to claim 7, **characterised in that** the projectile (10) is an item of ammunition.

**Patentansprüche**

1. Verfahren zum Ermitteln der Rotationsgeschwindigkeit der Geraden (5), die ein Geschoss (10) mit seinem Ziel verbindet, **dadurch gekennzeichnet, dass** die Rotationsgeschwindigkeit durch die Konvergenz von Kalman-Filtern in Abhängigkeit von den aerodynamischen Parametern des Geschosses (10) ermittelt wird, die an den Referenzmesswerten in einer mit dem Geschoss teilverbundenen Markierung $x_s$, $y_s$, $z_s$, wirken, deren Achse $x_s$ mit der Achse (20) des Geschosses zusammenfällt, und so, dass die lokale vertikale $z_o$ zu der Ebene ($x_s$, $z_s$) gehört, wobei die Ebenen $x_s$, $y_s$ und $x_s$, $z_s$ jeweils die Schlingerebene und die Stampfebene des Geschosses (10) definieren:

- wobei die Komponente $\dot{\eta}_{zs}$ des Rotationsgeschwindigkeitsvektors der Geraden in der Achse $z_s$ in der Schlingerebene durch aufeinander folgende Anwendung von zwei Kalman-Filtern geschätzt wird, wobei ein erstes Filter (43) die Schätzung der Rotationsgeschwindigkeit $r_s$ und des Anstellwinkels $\beta_s$ des Geschosses in der Schlingerebene in Abhängigkeit von Rotationsgeschwindigkeitsmesswerten des Geschosses $p_s$, $q_s$, $r_s$ in der teilverbundenen Markierung bewirkt, wobei ein zweites Filter (44) die Schätzung der Komponente $\dot{\eta}_{zs}$ in Abhängigkeit von der Komponente $\varepsilon_{zs}$ in der Schlingerebene eines Messwertes des Winkelabstands zwischen der Geraden (5) und der Achse (20) des Geschosses einerseits und der von dem ersten Filter erzeugten Schätzungen andererseits bewirkt;
- wobei die Komponente in der Stampfebene $\dot{\eta}_{ys}$ des Rotationsgeschwindigkeitsvektors der genannten Geraden auf der Achse $y_s$ durch aufeinander folgendes Anwenden von zwei Kalman-Filtern erfolgt, wobei ein erstes Filter (43) die Schätzung der Rotationsgeschwindigkeit $q_s$ und des Anstellwinkels $\alpha_s$ des Geschosses in der Stampfebene in Abhängigkeit von Rotationsgeschwindigkeitsmesswerten des Geschosses $p_s$, $q_s$, $r_s$ in der teilverbundenen Markierung bewirkt, wobei ein zweites Filter (44) die Schätzung der Komponente $\dot{\eta}_{ys}$ in Abhängigkeit von der Komponente $\varepsilon_{ys}$ in der Stampfebene eines Messwertes des Winkelabstands zwischen der Geraden (5) und der Achse (20) des Geschosses einerseits und der von dem ersten Filter erzeugten Schätzungen andererseits bewirkt,

wobei die Rotationsgeschwindigkeitsmessungen q, r des Geschosses und die Winkelabstandsmessungen $\varepsilon_y$, $\varepsilon_z$ von einem Abstandsmessgerät in einer mit dem Geschoss verbundenen Markierung x, y, z erfolgen und dann vor der Bearbeitung durch die Kalman-Filter in der teilverbundenen Markierung konvertiert werden.

2. Verfahren nach Anspruch 1, **dadurch gekennzeichnet, dass** die Beschleunigungsmessungen $\Gamma_y$, $\Gamma_z$ des Geschosses in einer mit dem Geschoss verbundenen Markierung x, y, z erfolgen und dann vor der Bearbeitung durch die Kalman-Filter in der teilverbundenen Markierung konvertiert werden.

3. Verfahren nach irgendeinem der vorherigen Ansprüche, **dadurch gekennzeichnet, dass**:

- für das erste Kalman-Filter in der Schlingerebene:

der Zustandsvektor wie folgt ist:

$$X = \begin{bmatrix} \breve{\beta}_s \\ r_s \end{bmatrix}$$

die Evolutionsmatrix wie folgt ist:

$$A = \begin{bmatrix} -\left(\omega_0 + \dfrac{\dot{V}}{V}\right) & -1 \\ K_\alpha & -f_q \end{bmatrix}$$

der Steuervektor wie folgt ist:

$$B = \begin{bmatrix} a\omega_0 \cdot \delta_{ns} \\ k \cdot p_s q_s. - K_\alpha b \cdot \delta_{ns} \end{bmatrix}$$

die Beobachtungsmatrix wie folgt ist: $C = [0\ 1]$
der Messwertvektor wie folgt ist: $Y = [r_s]$

- für das zweite Kalman-Filter in der Schlingerebene:

der Zustandsvektor wie folgt ist:

$$X = \begin{bmatrix} \dot{n}_{zs} \\ \varepsilon_{zs} \end{bmatrix}$$

die Evolutionsmatrix wie folgt ist:

$$A = \begin{bmatrix} 2\dfrac{V}{R} & \dfrac{\dot{V}}{R} \\ 1 & 0 \end{bmatrix}$$

der Steuervektor wie folgt ist:

$$B = \begin{bmatrix} \omega_0 \dfrac{V}{R} \cdot \beta_s - a\omega_0 \dfrac{V}{R} \cdot \delta_{ns} \\ -r_s \end{bmatrix}$$

die Beobachtungsmatrix wie folgt ist: C=[0 1]
der Messwertvektor wie folgt ist: Y=[$\varepsilon_{zs}$]

- für das erste Kalman-Filter in der Stampfebene:

der Zustandsvektor wie folgt ist:

$$X = \begin{bmatrix} \alpha_s \\ q_s \end{bmatrix}$$

die Evolutionsmatrix wie folgt ist:

$$A = \begin{bmatrix} -\left(\omega_0 + \dfrac{\dot{V}}{V}\right) & 1 \\ -K_\alpha & -f_q \end{bmatrix}$$

der Steuervektor wie folgt ist:

$$B = \begin{bmatrix} -a\omega_0 \cdot \delta_{ms} + \dfrac{g}{V} \cdot \cos\theta \\ -k \cdot r_s p_s - K_\alpha b \cdot \delta_{ms} \end{bmatrix}$$

die Beobachtungsmatrix wie folgt ist: C=[0 1]
der Messwertvektor wie folgt ist: Y=[$q_s$]

- für das zweite Kalman-Filter in der Stampfebene:

der Zustandsvektor wie folgt ist:

$$X = \begin{bmatrix} \dot{\eta}_{ys} \\ \dot{\varepsilon}_{ys} \end{bmatrix}$$

die Evolutionsmatrix wie folgt ist:

$$A = \begin{bmatrix} 2\dfrac{V}{R} & \dfrac{\dot{V}}{R} \\ 1 & 0 \end{bmatrix}$$

der Steuervektor wie folgt ist:

$$B = \begin{bmatrix} -\omega_0 \dfrac{V}{R}.\alpha_s - a\omega_0 \dfrac{V}{R}.\delta_{ms} + \dfrac{g}{R}\cdot\cos\theta \\ -q_s \end{bmatrix}$$

die Beobachtungsmatrix wie folgt ist: C=[0 1]
der Messwertvektor wie folgt ist: Y=[$\varepsilon_{ys}$]

wobei:

- V die Norm des Geschwindigkeitsvektors $\overline{V}$ des Geschosses (10) repräsentiert;
- $\dot{V}$ die Ableitung von V in Bezug auf die Zeit repräsentiert;
- R die Entfernung zwischen Geschoss und Ziel repräsentiert;
- g die Schwerkraftbeschleunigung repräsentiert;
- $\theta$ den Stampfwinkel des Geschosses (10) repräsentiert;
- $p_s$, $q_s$, $r_s$ die Komponenten des Rotationsgeschwindigkeitsvektors des Geschosses (10) in der teilverbundenen Markierung repräsentieren;
- $\alpha_s$ und $\beta_s$ die Anstellwinkel des Geschosses (10) repräsentieren, ausgedrückt in der teilverbundenen Markierung;
- $\delta_{ms}$ und $\delta_{ns}$ die auf die Ruderflächen (21, 22, 23) des Geschosses angewendeten Lenkwinkel repräsentieren, ausgedrückt in der teilverbundenen Markierung, und

$$f_q = -\frac{\overline{q}.S.d^2}{V.B}\cdot C_{mq} \quad ; \quad K_\alpha = -\frac{\overline{q}.S.d}{B}\cdot C_{m\alpha} \quad ; \quad \omega_0 = \frac{\overline{q}.S}{m.V}\cdot C_{z\alpha}$$

$$a = \frac{C_{z\delta}}{C_{z\alpha}} \quad ; \quad b = \frac{C_{m\delta}}{C_{m\alpha}} \quad ; \quad k = \frac{A}{B}$$

wobei $\overline{q}$ der kinetische Druck, d das Kaliber der Munition, S die Referenzfläche, A und B die axialen und transversalen Trägheiten, m die Masse und $C_{m\alpha}$, $C_{mq}$, $C_{m\delta}$, $C_{z\alpha}$, $C_{z\delta}$ die aerodynamischen Koeffizienten der Munition sind.

4. Verfahren nach irgendeinem der vorherigen Ansprüche, **dadurch gekennzeichnet, dass**:

- für das erste Kalman-Filter in der Schlingerebene:

der Zustandsvektor wie folgt ist:

$$X = \begin{bmatrix} \beta_s \\ r_s \end{bmatrix}$$

die Evolutionsmatrix wie folgt ist:

$$A = \begin{bmatrix} -\left(\omega_0 + \dfrac{\dot{V}}{V}\right) & -1 \\ K_\alpha & -f_q \end{bmatrix}$$

der Steuervektor wie folgt ist:

$$B = \begin{bmatrix} a\omega_0 . \delta_{ns} \\ k \cdot p_s q_s - K_\alpha b \cdot \delta_{ns} \end{bmatrix}$$

die Beobachtungsmatrix wie folgt ist: $C = [-\omega_0 V + K_\alpha x_N \; -f_q x_N]$

der Messwertvektor wie folgt ist: $Y = [\Gamma_{Ys} - (\alpha\omega_0 V - K_\alpha b x_N).\delta_{ns} - k x_N \cdot p_s q_s]$

- für das zweite Kalman-Filter in der Schlingerebene:

der Zustandsvektor wie folgt ist:

$$X = \begin{bmatrix} \dot{\eta}_{zs} \\ \varepsilon_{zs} \end{bmatrix}$$

die Evolutionsmatrix wie folgt ist:

$$A = \begin{bmatrix} 2\dfrac{V}{R} & \dfrac{\dot{V}}{R} \\ 1 & 0 \end{bmatrix}$$

der Steuervektor wie folgt ist:

$$B = \begin{bmatrix} \omega_0 \dfrac{V}{R}.\beta_s - a\omega_0 \dfrac{V}{R}.\delta_{ns} \\ -r_s \end{bmatrix}$$

die Beobachtungsmatrix wie folgt ist: $C = [0 \; 1]$

der Messwertvektor wie folgt ist: $Y = [\varepsilon_{zs}]$

- für das erste Kalman-Filter in der Stampfebene:

der Zustandsvektor wie folgt ist:

$$X = \begin{bmatrix} \alpha_s \\ q_s \end{bmatrix}$$

die Evolutionsmatrix wie folgt ist:

$$A = \begin{bmatrix} -\left(\omega_0 + \dfrac{\dot{V}}{V}\right) & 1 \\ -K_\alpha & -f_q \end{bmatrix}$$

der Steuervektor wie folgt ist:

$$B = \begin{bmatrix} -a\omega_0.\delta_{ms} + \dfrac{g}{V}\cdot\cos\theta \\ -k\cdot r_s p_s - K_\alpha b\cdot\delta_{ms} \end{bmatrix}$$

die Beobachtungsmatrix wie folgt ist: $C = [_L\ -\omega_0 V + K_\alpha x_N\ f_q x_N]$

der Messwertvektor wie folgt ist: $Y = [\Gamma_{Zs} + (a\omega_0 V - K_\alpha b x_N).\delta_{ms} - k x_N \cdot r_s p_s]$

- für das zweite Kalman-Filter in der Stampfebene:

der Zustandsvektor wie folgt ist:

$$X = \begin{bmatrix} \dot{\eta}_{ys} \\ \varepsilon_{ys} \end{bmatrix}$$

die Evolutionsmatrix wie folgt ist:

$$A = \begin{bmatrix} 2\dfrac{V}{R} & \dfrac{\dot{V}}{R} \\ 1 & 0 \end{bmatrix}$$

der Steuervektor wie folgt ist:

$$B = \begin{bmatrix} -\omega_0\dfrac{V}{R}.\alpha_s - a\omega_0\dfrac{V}{R}.\delta_{ms} + \dfrac{g}{R}\cdot\cos\theta \\ -q_s \end{bmatrix}$$

die Beobachtungsmatrix wie folgt ist: $C = [0\ 1]$

der Messwertvektor wie folgt ist: $Y = [\varepsilon_{ys}]$

wobei:

- V die Norm des Geschwindigkeitsvektors $\overline{V}$ des Geschosses (10) repräsentiert;
- $\dot{V}$ die Ableitung von V in Bezug auf die Zeit repräsentiert;
- R die Entfernung zwischen Geschoss und Ziel repräsentiert;
- g die Schwerkraftbeschleunigung repräsentiert;
- $\theta$ den Stampfwinkel des Geschosses (10) repräsentiert;
- $x_N$ die Abszisse des Messpunktes N der transversalen Beschleunigungen in Bezug auf den Schwerpunkt des Geschosses (10) repräsentiert;
- $p_s$, $q_s$, $r_s$ die Komponenten des Rotationsgeschwindigkeitsvektors des Geschosses (10) in der teilverbundenen Markierung repräsentieren;
- $\alpha_s$ und $\beta_s$ die Anstellwinkel des Geschosses (10) repräsentieren, ausgedrückt in der teilverbundenen Markierung;
- $\delta_{ms}$ und $\delta_{ns}$ die auf die Ruderflächen (21, 22, 23) des Geschosses angewendeten Lenkwinkel repräsentieren, ausgedrückt in der teilverbundenen Markierung, und

$$f_q = -\dfrac{\overline{q}.S.d^2}{V.B}\cdot C_{mq} \quad ; \quad K_\alpha = -\dfrac{\overline{q}.S.d}{B}\cdot C_{ma} \quad ; \quad \omega_0 = \dfrac{\overline{q}.S}{m.V}\cdot C_{za}$$

$$a = \frac{C_{z\delta}}{C_{z\alpha}} \quad ; \quad b = \frac{C_{m\delta}}{C_{m\alpha}} \quad ; \quad k = \frac{A}{B} \quad .$$

wobei $\bar{q}$ der kinetische Druck, d das Kaliber der Munition, S die Referenzfläche, A und B die axialen und transversalen Trägheiten, m die Masse und $C_{m\alpha}$, $C_{mq}$, $C_{m\delta}$, $C_{z\alpha}$, $C_{z\delta}$ die aerodynamischen Koeffizienten der Munition sind.

5. Vorrichtung zum Ermitteln der Rotationsgeschwindigkeit der Geraden (5), die ein Geschoss (10) mit seinem Ziel verbindet, **dadurch gekennzeichnet, dass** sie wenigstens Folgendes umfasst:

- einen Abstandsmesser (1), der vor dem Geschoss angeordnet ist und die Komponenten $\varepsilon_y$, $\varepsilon_z$ des Winkelabstands zwischen der Geraden (5) und der Achse (20) des Geschosses in der verbundenen Markierung misst;
- einen Rollsensor (2), der das Rollen $\varphi$ des Geschosses (10) misst;
- zwei transversale Gyrometer (3, 4), die in zwei orthogonalen Achsen y, z der verbundenen Markierung die Rotationsgeschwindigkeiten des Geschosses (10) um diese Achsen messen;
- einen Rechner (41) zum Umsetzen des Verfahrens nach irgendeinem der vorherigen Ansprüche, wobei die Messwerte in der teilverbundenen Markierung vor der Bearbeitung durch die Kalman-Filter (43, 44) mittels der Messung des Rollwinkels $\varphi$ konvertiert werden.

6. Vorrichtung zum Ermitteln der Rotationsgeschwindigkeit der Geraden (5), die ein Geschoss (10) mit seinem Ziel verbindet, die wenigstens Folgendes umfasst:

- einen Abstandsmesser (1), der vor dem Geschoss angeordnet ist und die Komponenten $\varepsilon_y$, $\varepsilon_z$ des Winkelabstands zwischen der Geraden (5) und der Achse (20) des Geschosses in der verbundenen Markierung misst;
- einen Rollsensor (2), der das Rollen $\varphi$ des Geschosses (10) misst;
- zwei transversale Beschleunigungsmesser, die die nicht schwerkraftbedingten Beschleunigungen eines Punktes der Achse (20) des Geschosses (10) in zwei orthogonalen Achsen y, z der verbundenen Markierung messen;

**dadurch gekennzeichnet, dass** die genannte Vorrichtung Folgendes umfasst:

- einen Rechner (41) zum Umsetzen des Verfahrens nach irgendeinem der vorherigen Ansprüche 5, 6, 7, wobei die Messwerte in der teilverbundenen Markierung vor der Bearbeitung durch die Kalman-Filter mittels der Messung des Rollwinkels $\varphi$ konvertiert werden.

7. Vorrichtung zum Lenken eines Geschosses, **dadurch gekennzeichnet, dass** sie eine Vorrichtung zum Ermitteln der Rotationsgeschwindigkeit der Geraden (5), die ein Geschoss (10) mit seinem Ziel verbindet, nach irgendeinem der vorherigen Ansprüche 6 und 7 umfasst, das die Komponenten der Rotationsgeschwindigkeit zu einem Rechner (42) sendet, der ein proportionales Navigationsgesetz anwendet.

8. Vorrichtung nach Anspruch 7, **dadurch gekennzeichnet, dass** das Geschoss (10) eine Munition ist.

FIG.1

FIG.2

FIG.3

FIG.4

EP 1 785 688 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2872928 A

**Littérature non-brevet citée dans la description**

• **V. Fleck et al.** Study of Real-time Filtering for an Inertial Measurement Unit (IMU) with Magnetometer in a 155mm Projectile. *Position, Location and Navigation Symposium, 2006 IEEE/ION Coronado, CA April 25-27, 2006, Piscataway, NJ, USA, IEEE,* 25 Avril 2006, 803-807

• **R.Kreichauf et al.** Estimation of the Roll Angle in a Spinning Guided Munition Shell. *Position, Location and Navigation Symposium, 2006 IEEE/ION Coronado, CA April 25-27, 2006, Piscataway, NJ, USA, IEEE,* 25 Avril 2006, 1-5